# EUROPEAN PATENT APPLICATION

(11) **EP 4 629 060 A1**
(43) Date of publication of application: **08.10.2025**
(21) Application number: 22969694.3
(22) Date of filing: 29.12.2022
(51) Int. Cl.: G06F 8/65

(54) **UPGRADING METHOD FOR VEHICLE-MOUNTED DEVICE, AND DEVICE**

(71) Applicant: Shenzhen Yinwang Intelligent Technologies Co., Ltd., Shenzhen, Guangdong 518110 (CN)
(72) Inventor: YANG, Yanjiang, Shenzhen, Guangdong 518129 (CN); LIANG, Zhiping, Shenzhen, Guangdong 518129 (CN); WEI, Zhuo, Shenzhen, Guangdong 518129 (CN)
(74) Representative: Pfenning, Meinig & Partner mbB
(86) International application number: PCT/CN2022/143491
(87) International publication number: WO 2024/138547

(57) **Abstract**

This application discloses a vehicle-mounted device upgrade method and a device, and relates to the field of information and communication technologies. The method includes: receiving first signature information and first public key information from an electronic device; and when verification of the first signature information and the first public key information succeeds, sending an upgrade package to the electronic device. The first signature information is obtained by signing a first upgrade request based on a private key of the electronic device, the first upgrade request is used to request the upgrade package of at least one vehicle-mounted device, the first public key information is used to verify an identity of the electronic device, and the first public key information includes a public key certificate of a public key of the electronic device, or the first public key information includes a public key of the electronic device. **In** this way, whether received information is tampered with may be verified based on the first signature information, and the identity of the electronic device may be verified based on the first public key information, to ensure security of upgrading the vehicle-mounted device.

## Description

### TECHNICAL FIELD

This application relates to the field of information and communication technologies, and in particular, to a vehicle-mounted device upgrade method and a device.

### BACKGROUND

With continuous development of computer technologies and internet technologies, functions of a vehicle-mounted device are increasingly rich. To continuously improve the functions of the vehicle-mounted device, firmware or software of the vehicle-mounted device needs to be upgraded periodically. Generally, the firmware or the software of the vehicle-mounted device is upgraded by recalling a vehicle. This upgrade manner has high costs and a long upgrade period.

To resolve this problem, a solution of upgrading the vehicle-mounted device based on an over the air (over the air, OTA) technology is proposed. For example, a peripheral device of the vehicle requests an upgrade package from a server, and sends the requested upgrade package to the vehicle-mounted device, so that the vehicle-mounted device upgrades the firmware or the software of the vehicle-mounted device. However, this method has a great security risk.

### SUMMARY

Embodiments of this application provide a vehicle-mounted device upgrade method and a device, to ensure upgrade security of the vehicle-mounted device.

To achieve the foregoing objectives, the following technical solutions are used in embodiments of this application.

According to a first aspect, a vehicle-mounted device upgrade method is provided. The method may be performed by a server, or may be performed by a module used in a server, for example, a chip, a chip system, or a circuit, or may be implemented by a logical module or software that can implement all or some functions of the server. This is not limited herein. For ease of description, the following uses an example in which the server performs the method for description.

The method includes: receiving first signature information and first public key information from an electronic device, where the first signature information is obtained by signing a first upgrade request based on a private key of the electronic device, the first upgrade request is used to request an upgrade package of at least one vehicle-mounted device, the first public key information is used to verify an identity of the electronic device, and the first public key information includes a public key certificate of a public key of the electronic device, or the first public key information includes a public key of the electronic device; and when verification of the first signature information and the first public key information succeeds, sending the upgrade package to the electronic device.

Based on the method provided in the first aspect, the server may verify validity of the electronic device based on the first public key information, for example, whether the electronic device has permission to download an upgrade package, and verify, based on the first signature information, whether received information is tampered with, to ensure security of upgrading the vehicle-mounted device.

In a possible implementation, the method further includes: verifying the first signature information based on the public key of the electronic device.

Based on the foregoing possible implementation, whether the first signature information is tampered with may be verified, to improve communication security.

In a possible implementation, the method further includes: receiving the public key of the electronic device from a vehicle-mounted control device; and sending the public key certificate to the vehicle-mounted control device, where the public key certificate is generated based on a private key of the server.

Based on the foregoing possible implementation, the server may generate the public key certificate for the public key of the electronic device, so that the server verifies validity of the electronic device based on the public key certificate.

In a possible implementation, the method further includes: verifying the public key certificate based on a public key of the server.

Based on the foregoing possible implementation, if the public key certificate is generated by the server based on the private key of the server, the server may verify the public key certificate based on the public key of the server.

In a possible implementation, the public key certificate is generated based on a private key of a vehicle-mounted control device, and the method further includes: verifying the public key certificate based on a public key of the vehicle-mounted control device.

Based on the foregoing possible implementation, if the public key certificate is generated based on the private key of the vehicle-mounted control device, the server may verify the public key certificate based on the public key of the vehicle-mounted control device.

In a possible implementation, the method further includes: receiving the public key of the electronic device from a vehicle-mounted control device; and generating authorization information of the public key of the electronic device.

Based on the foregoing possible implementation, the server may generate the authorization information of the public key for the public key of the electronic device, so that the server verifies validity of the electronic device based on the authorization information.

In a possible implementation, the method further includes: verifying the public key of the electronic device based on the authorization information.

Based on the foregoing possible implementation, the server does not need the public key certificate to verify validity of the electronic device, but verifies validity of the electronic device based on the authorization information. A certificate chain is not required in an entire verification process, and verification efficiency is high.

In a possible implementation, the method further includes: deleting the authorization information.

Based on the foregoing possible implementation, the server may cancel authorization on the electronic device.

In a possible implementation, the first upgrade request includes upgrade information of the at least one vehicle-mounted device.

Based on the foregoing possible implementation, the server may verify adaptation between the upgrade package and the at least one vehicle-mounted device based on the upgrade information. For example, if version information of latest released software stored in the server is the same as version information in the upgrade information, the server determines that the at least one vehicle-mounted device does not need to be upgraded; or if version information of latest released software stored in the server is later than version information in the upgrade information, the server determines that the at least one vehicle-mounted device needs to be upgraded.

In a possible implementation, the public key certificate includes at least one of the following: the upgrade information of the at least one vehicle-mounted device, an identifier of the vehicle-mounted control device, an identifier of the server, an identifier of the electronic device, an authorization period, or authorization purpose information.

Based on the foregoing possible implementation, if the public key certificate includes the upgrade information of the at least one vehicle-mounted device, it indicates that the authorization period of the public key certificate is short-term or one-time authorization. Optionally, if the public key certificate includes the upgrade information of the at least one vehicle-mounted device, it further indicates that the public key certificate is used to upgrade the vehicle-mounted device, and cannot be used for another service other than a vehicle-mounted device upgrade service. If the public key certificate includes the identifier of the vehicle-mounted control device, it indicates that the public key certificate is generated or authorized by the vehicle-mounted control device. If the public key certificate includes the identifier of the server, it indicates that the public key certificate is generated or authorized by the server. If the public key certificate includes the identifier of the electronic device, it indicates that the public key certificate is authorized to the electronic device.

According to a second aspect, a vehicle-mounted device upgrade method is provided. The method may be performed by an electronic device, or may be performed by a module used in the electronic device, for example, a chip, a chip system, or a circuit, or may be implemented by a logical module or software that can implement all or some functions of the electronic device. This is not limited herein. For ease of description, the following uses an example in which the electronic device performs the method for description.

The method includes: sending first signature information and first public key information to a server, where the first signature information is obtained by signing a first upgrade request based on a private key of the electronic device, the first upgrade request is used to request an upgrade package of at least one vehicle-mounted device, the first public key information is used to verify an identity of the electronic device, and the first public key information includes a public key certificate of a public key of the electronic device, or the first public key information includes a public key of the electronic device; receiving the upgrade package from the server; and sending the upgrade package to a vehicle-mounted control device.

Based on the method provided in the second aspect, the electronic device may send the first signature information and the first public key information to the server, so that the server can verify validity of the electronic device based on the first public key information, for example, whether the electronic device has permission to download an upgrade package, and verify, based on the first signature information, whether received information is tampered with, to ensure security of upgrading the vehicle-mounted device.

In a possible implementation, the method further includes: receiving the public key certificate from the vehicle-mounted control device, where the public key certificate is generated based on a private key of the vehicle-mounted control device, or the public key certificate is generated based on a private key of the server.

Based on the foregoing possible implementation, the electronic device may obtain the public key certificate, to subsequently request the upgrade package of the at least one vehicle-mounted device from the server based on the public key certificate.

In a possible implementation, the method further includes: obtaining the public key of the electronic device and the private key of the electronic device; and sending the public key of the electronic device to the vehicle-mounted control device.

Based on the foregoing possible implementation, after obtaining the public key of the electronic device, the electronic device may send the public key to the vehicle-mounted control device, so that the vehicle-mounted control device or the server generates the public key certificate for the public key.

In a possible implementation, the first upgrade request includes upgrade information of the at least one vehicle-mounted device.

Based on the foregoing possible implementation, the server may verify adaptation between the upgrade package and the at least one vehicle-mounted device based on the upgrade information. For example, if version information of latest released software stored in the server is the same as version information in the upgrade information, the server determines that the at least one vehicle-mounted device does not need to be upgraded; or if version information of latest released software stored in the server is later than version information in the upgrade information, the server determines that the at least one vehicle-mounted device needs to be upgraded.

In a possible implementation, the public key certificate includes at least one of the following: the upgrade information of the at least one vehicle-mounted device, an identifier of the vehicle-mounted control device, an identifier of the server, an identifier of the electronic device, an authorization period, or authorization purpose information.

Based on the foregoing possible implementation, if the public key certificate includes the upgrade information of the at least one vehicle-mounted device, it indicates that the authorization period of the public key certificate is short-term or one-time authorization. Optionally, if the public key certificate includes the upgrade information of the at least one vehicle-mounted device, it further indicates that the public key certificate is used to upgrade the vehicle-mounted device, and cannot be used for another service other than a vehicle-mounted device upgrade service. If the public key certificate includes the identifier of the vehicle-mounted control device, it indicates that the public key certificate is generated or authorized by the vehicle-mounted control device. If the public key certificate includes the identifier of the server, it indicates that the public key certificate is generated or authorized by the server. If the public key certificate includes the identifier of the electronic device, it indicates that the public key certificate is authorized to the electronic device.

In a possible implementation, the method further includes: receiving the upgrade information of the at least one vehicle-mounted device from the vehicle-mounted control device.

Based on the foregoing possible implementation, the electronic device may obtain the upgrade information of the at least one vehicle-mounted device from the vehicle-mounted control device, so that the electronic device sends the upgrade information to the server, and the server may verify adaptation between the upgrade package and the at least one vehicle-mounted device based on the upgrade information.

According to a third aspect, a vehicle-mounted device upgrade method is provided. The method may be performed by a vehicle-mounted control device, or may be performed by a module used in the vehicle-mounted control device, for example, a chip, a chip system, or a circuit, or may be implemented by a logical module or software that can implement all or some functions of the vehicle-mounted control device. This is not limited herein. For ease of description, the following uses an example in which the vehicle-mounted control device performs the method for description.

The method includes: receiving a public key of an electronic device from the electronic device; and sending a public key certificate of the public key of the electronic device to the electronic device, where the public key certificate is generated based on a private key of the vehicle-mounted control device, or the public key certificate is generated based on a private key of a server.

Based on the method provided in the third aspect, the vehicle-mounted control device may send the public key certificate of the public key of the electronic device to the electronic device, so that the electronic device requests the upgrade package from the server based on the public key certificate.

In a possible implementation, the public key certificate is generated based on the private key of the server, and the method further includes: sending the public key of the electronic device to the server; and receiving the public key certificate from the server.

Based on the foregoing possible implementation, the vehicle-mounted control device may send the public key of the electronic device to the server, so that the server generates the public key certificate for the public key.

In a possible implementation, the public key certificate includes at least one of the following: upgrade information of at least one vehicle-mounted device, an identifier of the vehicle-mounted control device, an identifier of the server, an identifier of the electronic device, an authorization period, or authorization purpose information.

Based on the foregoing possible implementation, if the public key certificate includes the upgrade information of the at least one vehicle-mounted device, it indicates that the authorization period of the public key certificate is short-term or one-time authorization. Optionally, if the public key certificate includes the upgrade information of the at least one vehicle-mounted device, it further indicates that the public key certificate is used to upgrade the vehicle-mounted device, and cannot be used for another service other than a vehicle-mounted device upgrade service. If the public key certificate includes the identifier of the vehicle-mounted control device, it indicates that the public key certificate is generated or authorized by the vehicle-mounted control device. If the public key certificate includes the identifier of the server, it indicates that the public key certificate is generated or authorized by the server. If the public key certificate includes the identifier of the electronic device, it indicates that the public key certificate is authorized to the electronic device.

In a possible implementation, the method further includes: sending the upgrade information of the at least one vehicle-mounted device to the electronic device.

Based on the foregoing possible implementation, the vehicle-mounted control device may send the upgrade information of the at least one vehicle-mounted device to the electronic device, so that the electronic device sends the upgrade information to the server, and the server may verify adaptation between the upgrade package and the at least one vehicle-mounted device based on the upgrade information.

According to a fourth aspect, a vehicle-mounted device upgrade method is provided. The method may be performed by a vehicle-mounted control device, or may be performed by a module used in the vehicle-mounted control device, for example, a chip, a chip system, or a circuit, or may be implemented by a logical module or software that can implement all or some functions of the vehicle-mounted control device. This is not limited herein. For ease of description, the following uses an example in which the vehicle-mounted control device performs the method for description.

The method includes: receiving a public key of an electronic device from the electronic device; and sending the public key of the electronic device and first indication information to a server, where the first indication information indicates authorization information for generating the public key of the electronic device.

Based on the method provided in the fourth aspect, the vehicle-mounted control device may indicate the server to generate the authorization information for the public key of the electronic device. In this way, when the electronic device requests the upgrade package from the server, the server does not need the public key certificate to verify validity of the electronic device, but verifies validity of the electronic device based on the authorization information. A certificate chain is not required in an entire verification process, and verification efficiency is high.

In a possible implementation, the method further includes: sending upgrade information of at least one vehicle-mounted device to the electronic device.

Based on the foregoing possible implementation, the vehicle-mounted control device may send the upgrade information of the at least one vehicle-mounted device to the electronic device, so that the electronic device sends the upgrade information to the server, and the server may verify adaptation between the upgrade package and the at least one vehicle-mounted device based on the upgrade information.

According to a fifth aspect, a vehicle-mounted device upgrade method is provided. The method may be performed by a server, or may be performed by a module used in a server, for example, a chip, a chip system, or a circuit, or may be implemented by a logical module or software that can implement all or some functions of the server. This is not limited herein. For ease of description, the following uses an example in which the server performs the method for description.

The method includes: receiving second signature information from an electronic device, where the second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device; and when verification of the second signature information succeeds, sending the upgrade package to the electronic device.

Based on the method provided in the fifth aspect, the server may verify validity of the electronic device based on the second signature information, for example, whether the electronic device has permission to download an upgrade package, and verify whether received information is tampered with, to ensure security of upgrading the vehicle-mounted device.

In a possible implementation, the method further includes: verifying the second signature information based on a public key of the vehicle-mounted control device.

Based on the foregoing possible implementation, the server may verify the second signature information based on the public key of the vehicle-mounted control device, to verify validity of the electronic device and whether the received information is tampered with.

In a possible implementation, the method further includes: storing the authorization information in an authorization information cancellation list.

Based on the foregoing possible implementation, the server may cancel authorization on the electronic device by storing the authorization information in the authorization information cancellation list.

In a possible implementation, the first upgrade request includes upgrade information of the at least one vehicle-mounted device.

Based on the foregoing possible implementation, the server may verify adaptation between the upgrade package and the at least one vehicle-mounted device based on the upgrade information. For example, if version information of latest released software stored in the server is the same as version information in the upgrade information, the server determines that the at least one vehicle-mounted device does not need to be upgraded; or if version information of latest released software stored in the server is later than version information in the upgrade information, the server determines that the at least one vehicle-mounted device needs to be upgraded.

In a possible implementation, the authorization information includes at least one of the following: the upgrade information of the at least one vehicle-mounted device, an identifier of the vehicle-mounted control device, an identifier of the server, an identifier of the electronic device, an authorization period, or authorization purpose information.

Based on the foregoing possible implementation, if the authorization information includes the upgrade information of the at least one vehicle-mounted device, it indicates that the authorization period of the proxy signature key is short-term or one-time authorization. Optionally, if the authorization information includes the upgrade information of the at least one vehicle-mounted device, it further indicates that the proxy signature key is used to upgrade the vehicle-mounted device, and cannot be used for another service other than a vehicle-mounted device upgrade service. If the authorization information includes the identifier of the vehicle-mounted control device, it indicates that the proxy signature key is generated or authorized by the vehicle-mounted control device. If the authorization information includes the identifier of the server and the identifier of the electronic device, it indicates that the proxy signature key is used for verification between the server and the electronic device.

According to a sixth aspect, a vehicle-mounted device upgrade method is provided. The method may be performed by an electronic device, or may be performed by a module used in the electronic device, for example, a chip, a chip system, or a circuit, or may be implemented by a logical module or software that can implement all or some functions of the electronic device. This is not limited herein. For ease of description, the following uses an example in which the electronic device performs the method for description.

The method includes: sending second signature information to a server, where the second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device; receiving the upgrade package from the server; and sending the upgrade package to the vehicle-mounted control device.

Based on the method provided in the sixth aspect, the electronic device may send the second signature information to the server, so that the server verifies validity of the electronic device based on the second signature information, for example, whether the electronic device has permission to download an upgrade package, and verifies whether the received information is tampered with, to ensure security of upgrading the vehicle-mounted device.

In a possible implementation, the method further includes: receiving the proxy signature key from the vehicle-mounted control device.

Based on the foregoing possible implementation, the electronic device may obtain the proxy signature key from the vehicle-mounted control device.

In a possible implementation, the first upgrade request includes upgrade information of the at least one vehicle-mounted device.

Based on the foregoing possible implementation, the electronic device may send the upgrade information of the at least one vehicle-mounted device to the server, so that the server verifies adaptation between the upgrade package and the at least one vehicle-mounted device based on the upgrade information. For example, if version information of latest released software stored in the server is the same as version information in the upgrade information, the server determines that the at least one vehicle-mounted device does not need to be upgraded; or if version information of latest released software stored in the server is later than version information in the upgrade information, the server determines that the at least one vehicle-mounted device needs to be upgraded.

In a possible implementation, the authorization information includes at least one of the following: the upgrade information of the at least one vehicle-mounted device, an identifier of the vehicle-mounted control device, an identifier of the server, an identifier of the electronic device, an authorization period, or authorization purpose information.

Based on the foregoing possible implementation, if the authorization information includes the upgrade information of the at least one vehicle-mounted device, it indicates that the authorization period of the proxy signature key is short-term or one-time authorization. Optionally, if the authorization information includes the upgrade information of the at least one vehicle-mounted device, it further indicates that the proxy signature key is used to upgrade the vehicle-mounted device, and cannot be used for another service other than a vehicle-mounted device upgrade service. If the authorization information includes the identifier of the vehicle-mounted control device, it indicates that the proxy signature key is generated or authorized by the vehicle-mounted control device. If the authorization information includes the identifier of the server and the identifier of the electronic device, it indicates that the proxy signature key is used for verification between the server and the electronic device.

In a possible implementation, the method further includes: receiving the upgrade information of the at least one vehicle-mounted device from the vehicle-mounted control device.

Based on the foregoing possible implementation, the electronic device may obtain the upgrade information of the at least one vehicle-mounted device from the vehicle-mounted control device, so that the electronic device sends the upgrade information to the server, and the server may verify adaptation between the upgrade package and the at least one vehicle-mounted device based on the upgrade information.

According to a seventh aspect, a vehicle-mounted device upgrade method is provided. The method may be performed by a vehicle-mounted control device, or may be performed by a module used in the vehicle-mounted control device, for example, a chip, a chip system, or a circuit, or may be implemented by a logical module or software that can implement all or some functions of the vehicle-mounted control device. This is not limited herein. For ease of description, the following uses an example in which the vehicle-mounted control device performs the method for description.

The method includes: obtaining a proxy signature key, where the proxy signature key is obtained based on a private key of the vehicle-mounted control device and authorization information of the proxy signature key; and sending the proxy signature key to an electronic device.

Based on the method provided in the seventh aspect, the vehicle-mounted control device may obtain the proxy signature key and send the proxy signature key to the electronic device, so that a server verifies validity of the electronic device based on the proxy signature key.

In a possible implementation, the authorization information includes at least one of the following: upgrade information of at least one vehicle-mounted device, an identifier of the vehicle-mounted control device, an identifier of the server, an identifier of the electronic device, an authorization period, or authorization purpose information.

Based on the foregoing possible implementation, if the authorization information includes the upgrade information of the at least one vehicle-mounted device, it indicates that the authorization period of the proxy signature key is short-term or one-time authorization. Optionally, if the authorization information includes the upgrade information of the at least one vehicle-mounted device, it further indicates that the proxy signature key is used to upgrade the vehicle-mounted device, and cannot be used for another service other than a vehicle-mounted device upgrade service. If the authorization information includes the identifier of the vehicle-mounted control device, it indicates that the proxy signature key is generated or authorized by the vehicle-mounted control device. If the authorization information includes the identifier of the server and the identifier of the electronic device, it indicates that the proxy signature key is used for verification between the server and the electronic device.

In a possible implementation, the method further includes: sending the upgrade information of the at least one vehicle-mounted device to the electronic device.

Based on the foregoing possible implementation, the vehicle-mounted control device may send the upgrade information of the at least one vehicle-mounted device to the electronic device, so that the electronic device sends the upgrade information to the server, and the server may verify adaptation between the upgrade package and the at least one vehicle-mounted device based on the upgrade information.

According to an eighth aspect, a communication device is provided to implement the foregoing method. The communication device may be the server in the first aspect, or an apparatus including the server, or a module in the server in the first aspect, for example, a chip, a chip system, or a circuit, or a logical module or software implementation that can implement some or all functions of the server. Alternatively, the communication device may be the server in the fifth aspect, or an apparatus including the server, or a module in the server in the fifth aspect, for example, a chip, a chip system, or a circuit, or a logical module or software implementation that can implement some or all functions of the server. Alternatively, the communication device may be the vehicle-mounted control device in the seventh aspect, or an apparatus including the vehicle-mounted control device, or a module in the vehicle-mounted control device in the seventh aspect, for example, a chip, a chip system, or a circuit, or a logical module or software implementation that can implement some or all functions of the vehicle-mounted control device. The communication device includes a corresponding module, unit, or means (means) for implementing the foregoing method. The module, unit, or means may be implemented by using hardware or software, or implemented by hardware executing corresponding software. The hardware or the software includes one or more modules or units corresponding to the foregoing functions.

With reference to the eighth aspect, in a possible implementation, the communication device may include a processing module and a transceiver module. The processing module may be configured to implement the processing function according to any one of the first aspect, the fifth aspect, the seventh aspect, and the possible implementations of the first aspect, the fifth aspect, and the seventh aspect. The processing module may be, for example, a processor. The transceiver module may also be referred to as a transceiver unit, and is configured to implement the sending function and/or the receiving function according to any one of the first aspect, the fifth aspect, the seventh aspect, and the possible implementations of the first aspect, the fifth aspect, and the seventh aspect. The transceiver module may include a transceiver circuit, a transceiver machine, a transceiver, or a communication interface.

With reference to the eighth aspect, in a possible implementation, the transceiver module includes a sending module and a receiving module, where the sending module and the receiving module are respectively configured to implement the sending function and the receiving function according to any one of the first aspect, the fifth aspect, the seventh aspect, and the possible implementations of the first aspect, the fifth aspect, and the seventh aspect.

According to a ninth aspect, a communication device is provided to implement the foregoing method. The communication device may be the electronic device in the second aspect, or an apparatus including the electronic device, or a module in the electronic device in the second aspect, for example, a chip, a chip system, or a circuit, or a logical module or software implementation that can implement some or all functions of the electronic device. The communication device includes a corresponding module, unit, or means for implementing the foregoing method. The module, unit, or means may be implemented by using hardware or software, or implemented by hardware executing corresponding software. The hardware or the software includes one or more modules or units corresponding to the foregoing functions.

With reference to the ninth aspect, in a possible implementation, the communication device may include a transceiver module. The transceiver module may also be referred to as a transceiver unit, and is configured to implement the sending function and/or the receiving function according to any one of the second aspect or the possible implementations of the second aspect. The transceiver module may include a transceiver circuit, a transceiver machine, a transceiver, or a communication interface.

With reference to the ninth aspect, in a possible implementation, the transceiver module includes a sending module and a receiving module, where the sending module and the receiving module are respectively configured to implement the sending function and the receiving function according to any one of the second aspect or the possible implementations of the second aspect.

With reference to the ninth aspect, in a possible implementation, the communication device may further include a processing module. The processing module may be configured to implement the processing function according to any one of the second aspect or the possible implementations of the second aspect. The processing module may be, for example, a processor.

According to a tenth aspect, a communication device is provided to implement the foregoing method. The communication device may be the vehicle-mounted control device in the third aspect, or an apparatus including the vehicle-mounted control device, or a module in the vehicle-mounted control device in the third aspect, for example, a chip, a chip system, or a circuit, or a logical module or software implementation that can implement some or all functions of the vehicle-mounted control device. Alternatively, the communication device may be the vehicle-mounted control device in the fourth aspect, or an apparatus including the vehicle-mounted control device, or a module in the vehicle-mounted control device in the fourth aspect, for example, a chip, a chip system, or a circuit, or a logical module or software implementation that can implement some or all functions of the vehicle-mounted control device. Alternatively, the communication device may be the electronic device in the sixth aspect, or an apparatus including the electronic device, or a module in the electronic device in the sixth aspect, for example, a chip, a chip system, or a circuit, or a logical module or software implementation that can implement some or all functions of the vehicle-mounted control device. The communication device includes a corresponding module, unit, or means (means) for implementing the foregoing method. The module, unit, or means may be implemented by using hardware or software, or implemented by hardware executing corresponding software. The hardware or the software includes one or more modules or units corresponding to the foregoing functions.

With reference to the tenth aspect, in a possible implementation, the communication device may include a transceiver module. The transceiver module may also be referred to as a transceiver unit, and is configured to implement the sending function and/or the receiving function according to any one of the third aspect, the fourth aspect, the sixth aspect, and the possible implementations of the third aspect, the fourth aspect, and the sixth aspect. The transceiver module may include a transceiver circuit, a transceiver machine, a transceiver, or a communication interface.

With reference to the tenth aspect, in a possible implementation, the transceiver module includes a sending module and a receiving module, where the sending module and the receiving module are configured to implement the sending function and the receiving function according to any one of the third aspect, the fourth aspect, the sixth aspect, and the possible implementations of the third aspect, the fourth aspect, and the sixth aspect.

According to an eleventh aspect, a communication device is provided, and includes a processor. The processor is configured to: after being coupled to a memory and reading instructions in the memory, perform, based on the instructions, the method according to any one of the foregoing aspects. The communication device may be the server in the first aspect, or an apparatus including the server, or a module in the server in the first aspect, for example, a chip, a chip system, or a circuit, or a logical module or software implementation that can implement some or all functions of the server. Alternatively, the communication device may be the electronic device in the second aspect, or an apparatus including the electronic device, or a module in the electronic device in the second aspect, for example, a chip, a chip system, or a circuit, or a logical module or software implementation that can implement some or all functions of the electronic device. Alternatively, the communication device may be the vehicle-mounted control device in the third aspect, or an apparatus including the vehicle-mounted control device, or a module in the vehicle-mounted control device in the third aspect, for example, a chip, a chip system, or a circuit, or a logical module or software implementation that can implement some or all functions of the vehicle-mounted control device. Alternatively, the communication device may be the vehicle-mounted control device in the fourth aspect, or an apparatus including the vehicle-mounted control device, or a module in the vehicle-mounted control device in the fourth aspect, for example, a chip, a chip system, or a circuit, or a logical module or software implementation that can implement some or all functions of the vehicle-mounted control device. Alternatively, the communication device may be the server in the fifth aspect, or an apparatus including the server, or a module in the server in the fifth aspect, for example, a chip, a chip system, or a circuit, or a logical module or software implementation that can implement some or all functions of the server. Alternatively, the communication device may be the electronic device in the sixth aspect, or an apparatus including the electronic device, or a module in the electronic device in the sixth aspect, for example, a chip, a chip system, or a circuit, or a logical module or software implementation that can implement some or all functions of the electronic device. Alternatively, the communication device may be the vehicle-mounted control device in the seventh aspect, or an apparatus including the vehicle-mounted control device, or a module in the vehicle-mounted control device in the seventh aspect, for example, a chip, a chip system, or a circuit, or a logical module or software implementation that can implement some or all functions of the vehicle-mounted control device.

With reference to the eleventh aspect, in a possible implementation, the communication device further includes the memory. The memory is configured to store necessary program instructions and data.

With reference to the eleventh aspect, in a possible implementation, the communication device is a chip or a chip system. Optionally, when the communication device is the chip system, the communication device may include a chip, or may include a chip and another discrete component.

According to a twelfth aspect, a communication device is provided, including a processor and an interface circuit. The interface circuit is configured to receive a computer program or instructions, and transmit the computer program or the instructions to the processor. The processor is configured to execute the computer program or the instructions, to enable the communication device to perform the method according to any one of the foregoing aspects. The communication device may be the server in the first aspect, or an apparatus including the server, or a module in the server in the first aspect, for example, a chip, a chip system, or a circuit, or a logical module or software implementation that can implement some or all functions of the server. Alternatively, the communication device may be the electronic device in the second aspect, or an apparatus including the electronic device, or a module in the electronic device in the second aspect, for example, a chip, a chip system, or a circuit, or a logical module or software implementation that can implement some or all functions of the electronic device. Alternatively, the communication device may be the vehicle-mounted control device in the third aspect, or an apparatus including the vehicle-mounted control device, or a module in the vehicle-mounted control device in the third aspect, for example, a chip, a chip system, or a circuit, or a logical module or software implementation that can implement some or all functions of the vehicle-mounted control device. Alternatively, the communication device may be the vehicle-mounted control device in the fourth aspect, or an apparatus including the vehicle-mounted control device, or a module in the vehicle-mounted control device in the fourth aspect, for example, a chip, a chip system, or a circuit, or a logical module or software implementation that can implement some or all functions of the vehicle-mounted control device. Alternatively, the communication device may be the server in the fifth aspect, or an apparatus including the server, or a module in the server in the fifth aspect, for example, a chip, a chip system, or a circuit, or a logical module or software implementation that can implement some or all functions of the server. Alternatively, the communication device may be the electronic device in the sixth aspect, or an apparatus including the electronic device, or a module in the electronic device in the sixth aspect, for example, a chip, a chip system, or a circuit, or a logical module or software implementation that can implement some or all functions of the electronic device. Alternatively, the communication device may be the vehicle-mounted control device in the seventh aspect, or an apparatus including the vehicle-mounted control device, or a module in the vehicle-mounted control device in the seventh aspect, for example, a chip, a chip system, or a circuit, or a logical module or software implementation that can implement some or all functions of the vehicle-mounted control device.

With reference to the twelfth aspect, in a possible implementation, the communication device is a chip or a chip system. Optionally, when the communication device is the chip system, the communication device may include a chip, or may include a chip and another discrete component.

According to a thirteenth aspect, a computer-readable storage medium is provided. The computer-readable storage medium stores instructions. When the instructions are run on a computer, the computer is enabled to perform the method according to any one of the foregoing aspects.

According to a fourteenth aspect, a computer program product including instructions is provided. When the instructions are run on a computer, the computer is enabled to perform the method according to any one of the foregoing aspects.

According to a fifteenth aspect, a vehicle is provided. The vehicle includes a vehicle-mounted control device configured to perform the method according to the third aspect, or a vehicle-mounted control device configured to perform the method according to the fourth aspect, or a vehicle-mounted control device configured to perform the method according to the seventh aspect.

According to a sixteenth aspect, an upgrade system is provided. The upgrade system includes a server configured to perform the method according to the first aspect, an electronic device configured to perform the method according to the second aspect, and a vehicle-mounted control device configured to perform the method according to the third aspect.

According to a seventeenth aspect, an upgrade system is provided. The upgrade system includes a server configured to perform the method according to the first aspect, an electronic device configured to perform the method according to the second aspect, and a vehicle-mounted control device configured to perform the method according to the fourth aspect.

According to an eighteenth aspect, an upgrade system is provided. The upgrade system includes a server configured to perform the method according to the fifth aspect, an electronic device configured to perform the method according to the sixth aspect, and a vehicle-mounted control device configured to perform the method according to the seventh aspect.

For a technical effect achieved by any one of the possible implementations of the eighth aspect to the eighteenth aspect, refer to a technical effect achieved by any one of the first aspect, the second aspect, or different possible implementations of the first aspect or the second aspect. Details are not described herein again.

It may be understood that the solutions in the foregoing aspects may be combined on a premise that the solutions are not contradictory.

### BRIEF DESCRIPTION OF DRAWINGS

FIG. 1A is a diagram of an architecture of an upgrade system according to an embodiment of this application;
FIG. 1B is a diagram of a network architecture according to an embodiment of this application;
FIG. 2 is a diagram of a hardware structure of a communication device according to an embodiment of this application;
FIG. 3 is a schematic flowchart 1 of a vehicle-mounted device upgrade method according to an embodiment of this application;
FIG. 4 is a schematic flowchart 2 of a vehicle-mounted device upgrade method according to an embodiment of this application;
FIG. 5 is a schematic flowchart 3 of a vehicle-mounted device upgrade method according to an embodiment of this application;
FIG. 6 is a schematic flowchart 4 of a vehicle-mounted device upgrade method according to an embodiment of this application;
FIG. 7 is a schematic flowchart 5 of a vehicle-mounted device upgrade method according to an embodiment of this application;
FIG. 8 is a diagram 1 of a structure of a communication device according to an embodiment of this application;
FIG. 9 is a diagram 2 of a structure of a communication device according to an embodiment of this application; and
FIG. 10 is a diagram 3 of a structure of a communication device according to an embodiment of this application.

### DESCRIPTION OF EMBODIMENTS

The following describes implementations of embodiments of this application in detail with reference to the accompanying drawings.

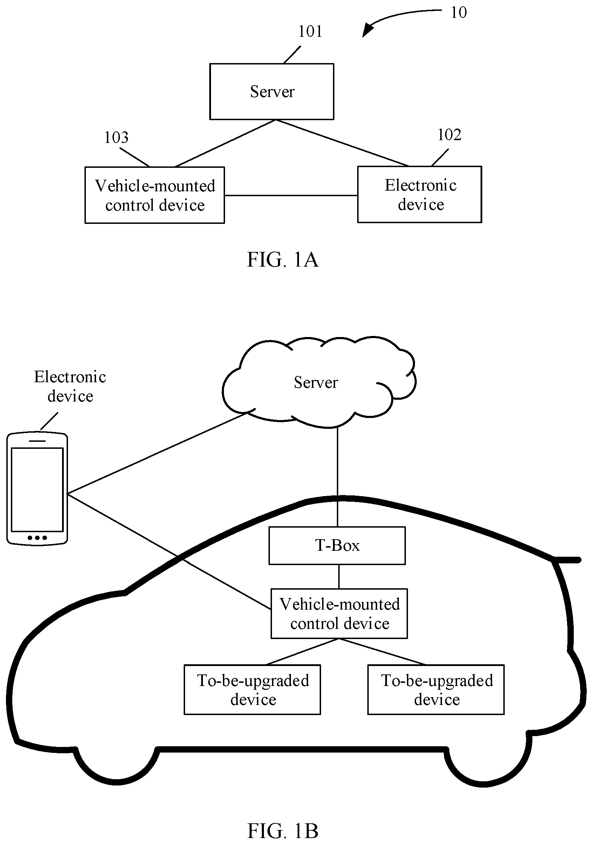

Methods provided in embodiments of this application may be used in various upgrade systems. The following uses an upgrade system 10 shown in FIG. 1A as an example to describe the method provided in embodiments of this application. FIG. 1A is merely a diagram, and does not constitute a limitation on scenarios to which the technical solutions provided in this application are applicable.

FIG. 1A is a diagram of an architecture of the upgrade system 10 according to an embodiment of this application. In FIG. 1A, the upgrade system 10 may include a server 101, an electronic device 102 that may be in a communication connection to the server 101, and a vehicle-mounted control device 103 that may be in a communication connection to both the server 101 and the electronic device 102.

The server 101 may be in the communication connection to the electronic device 102 through a cellular network, a Wi-Fi system, or the like. The server 101 may be in the communication connection to the vehicle-mounted control device 103 through a cellular network, a Wi-Fi system, or the like. The electronic device 102 may be in the communication connection to the vehicle-mounted control device 103 through a cellular network, a Wi-Fi system, near field communication (near field communication, NFC), Bluetooth, a data cable, or the like. In embodiments of this application, the cellular network may include any one or more networks related to a 3rd generation partnership project (3rd generation partnership project, 3GPP), for example, a 4th generation (4th generation, 4G) network, a 5th generation (5th generation, 5G) network, or a future evolved network.

The server in embodiments of this application, for example, the server 101, is a device having a communication capability and a computing capability. For example, the server is a computer, a computing device, or a cloud server.

The electronic device in embodiments of this application, for example, the electronic device 102, is a device having a communication capability and a computing capability. For example, the electronic device is a terminal, a charging pile, or a universal serial bus (universal serial bus, USB) card. The terminal may alternatively be referred to as a terminal device, and the terminal device may be user equipment (user equipment, UE). The UE includes a handheld device, a wearable device, or a computing device that has a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, or the like.

The vehicle-mounted control device in embodiments of this application, for example, the vehicle-mounted control device 103, is any vehicle-mounted device having a communication capability and a computing capability. For example, the vehicle-mounted control device is an OTA manager (OTA Manager), a telematics box (telematics box, T-Box), a gateway (gateway), a multi-domain controller (multi-domain controller, MDC), a vehicle control unit (vehicle control unit, VCU), or an electronic control unit (electronic control unit, ECU).

In FIG. 1A, the server 101 and the vehicle-mounted control device 103 are mutual-trust devices, and the vehicle-mounted control device 103 and the electronic device 102 are mutual-trust devices. In other words, a trust relationship is established between the server 101 and the vehicle-mounted control device 103, and a trust relationship is established between the vehicle-mounted control device 103 and the electronic device 102. In this way, the electronic device 102 may request an upgrade package of at least one vehicle-mounted device from the server 101 based on an identity authentication credential (first public key information or a proxy signature key in the following) provided by the vehicle-mounted control device 103 for the electronic device 102. After verifying that the identity authentication credential is valid, the server 101 sends the upgrade package to the electronic device 102, so that the electronic device 102 sends the upgrade package to the vehicle-mounted control device 103 at an appropriate time, to ensure security of upgrading the vehicle-mounted device.

Optionally, the electronic device 102 may further assist in storing software information or firmware information of the vehicle-mounted device, for example, at least one of current version information of software/firmware, a size of software/firmware, or developer information of software/firmware.

Optionally, the electronic device 102 may further convert a security mechanism between the server 101 and the vehicle-mounted control device 103. For example, the server 101 sends, to the electronic device 101, information obtained by encrypting first information according to a first algorithm. After receiving the information, the electronic device 102 decrypts the information to obtain the first information, and sends, to the vehicle-mounted control device 103, information obtained by encrypting the first information according to a second algorithm. It may be understood that after receiving the information obtained by encrypting the first information according to the first algorithm, the electronic device 102 may further detect the information via a security module (for example, installed security software) in the electronic device 102, to improve communication security.

Optionally, the electronic device 102 may further jointly store, in a key sharing (secret sharing) manner with the vehicle-mounted control device 103, a key used by a vehicle for communication, to improve vehicle communication security.

The upgrade system 10 shown in FIG. 1A is merely used as an example, but is not intended to limit the technical solutions of this application. A person skilled in the art should understand that, in a specific implementation process, the upgrade system 10 may further include another device, and a quantity of servers, vehicle-mounted control devices, or electronic devices may be determined based on a specific requirement. This is not limited.

In a possible implementation, the upgrade system 10 shown in FIG. 1A may be used in a network architecture shown in FIG. 1B.

As shown in FIG. 1B, an embodiment of this application provides a network architecture. In FIG. 1B, the network architecture includes a server, an electronic device in a communication connection to the server, and a vehicle in a communication connection to the server and the electronic device. The vehicle includes a T-Box, a vehicle-mounted control device in a communication connection to the T-Box, and a to-be-upgraded device in a communication connection to the vehicle-mounted control device.

It may be understood that a device corresponding to the server 101 in FIG. 1A is a server in FIG. 1B, a device corresponding to the electronic device 102 in FIG. 1A is an electronic device in FIG. 1B, and a device corresponding to the vehicle-mounted control device 103 in FIG. 1A is a vehicle-mounted control device in FIG. 1B.

In FIG. 1B, the electronic device may be configured to: request an upgrade package of at least one to-be-upgraded device from the server, and send the requested upgrade package to the vehicle-mounted control device. The server is configured to: receive, from the electronic device, information used to request the upgrade package of the at least one to-be-upgraded device, verify an identity of the electronic device, and send the requested upgrade package to the electronic device when the identity of the electronic device is valid. The vehicle-mounted control device is configured to: receive the upgrade package of the at least one to-be-upgraded device from the electronic device, and send the upgrade package to the corresponding to-be-upgraded device. The T-Box is configured to forward information received from the device outside the vehicle to the device in the vehicle, and forward information from the device in the vehicle to the device outside the vehicle. For example, the T-Box forwards information between the server and the vehicle-mounted control device. It should be understood that the server and the vehicle-mounted control device may alternatively directly communicate with each other instead of communicating with each other through the T-Box. This is not limited.

In FIG. 1B, the to-be-upgraded device may be any to-be-upgraded vehicle-mounted device, for example, any device having a human machine interface (human machine interface, HMI), a battery management system (battery management system, BMS), or an ECU.

In FIG. 1B, the vehicle-mounted control device is independently deployed in the vehicle. However, in specific application, the vehicle-mounted control device may not be independently deployed in the vehicle, but may be implemented as a function module of one or more vehicle-mounted devices. In other words, a function of the vehicle-mounted control device may be deployed on any one or more devices in the vehicle. For example, the function of the vehicle-mounted control device is deployed on the T-Box, a gateway, or a to-be-upgraded device. This is not limited.

In embodiments of this application, "a plurality of" may be understood as two or more. This is uniformly described herein, and details are not described below.

It may be understood that the network architecture shown in FIG. 1B is merely used as an example, and is not intended to limit the technical solutions of this application. A person skilled in the art should understand that, in a specific implementation process, the network architecture may further include another device, and a quantity of servers, vehicle-mounted control devices, electronic devices, to-be-upgraded devices, or vehicles may be determined based on a specific requirement. This is not limited.

Optionally, each device (for example, the server, the electronic device, or the vehicle-mounted control device) in FIG. 1A or FIG. 1B in embodiments of this application may alternatively be referred to as a communication device, and may be a general-purpose device or a dedicated device. This is not specifically limited in embodiments of this application.

Optionally, related functions of the devices (for example, the server, the electronic device, or the vehicle-mounted control device) in FIG. 1A or FIG. 1B in embodiments of this application may be implemented by one device, or may be jointly implemented by a plurality of devices, or may be implemented by one or more function modules in one device. This is not specifically limited in embodiments of this application. It may be understood that, the foregoing function may be an element in a hardware device, or may be a software function running on dedicated hardware, or a combination of hardware and software, or a virtualization function instantiated on a platform (for example, a cloud platform).

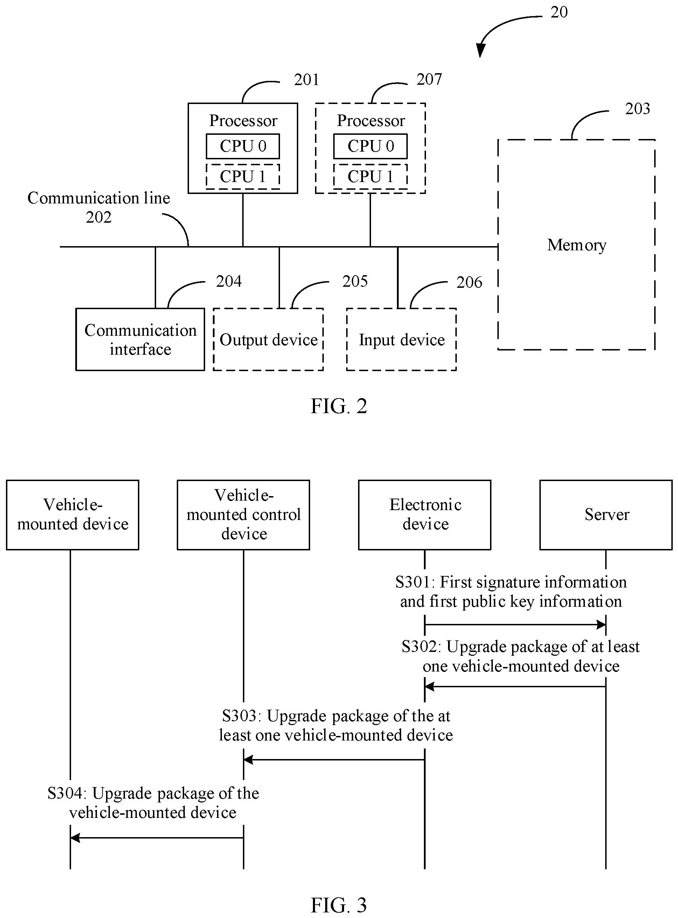

During specific implementation, each device (for example, the server, the electronic device, or the vehicle-mounted control device) in FIG. 1A or FIG. 1B in embodiments of this application may have a composition structure shown in FIG. 2, or include components shown in FIG. 2. FIG. 2 is a diagram of a hardware structure of a communication device according to an embodiment of this application. The communication device 20 includes at least one processor 201 and at least one communication interface 204, and is configured to implement the method provided in embodiments of this application. The communication device 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path for transferring information between the foregoing components, for example, a bus.

The communication interface 204 is configured to communicate with another device or a communication network. The communication interface 204 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may exist independently, and is coupled to the processor 201 through the communication line 202. The memory 203 may alternatively be integrated with the processor 201. The memory provided in embodiments of this application may be usually non-volatile.

The memory 203 is configured to store computer-executable instructions for executing the solutions provided in embodiments of this application, and the processor 201 controls execution. The processor 201 is configured to execute the computer-executable instructions stored in the memory 203, to implement the method provided in embodiments of this application. Alternatively, optionally, in embodiments of this application, the processor 201 may perform processing-related functions in a method provided in the following embodiments of this application, and the communication interface 204 is responsible for communication with another device or a communication network. This is not specifically limited in embodiments of this application.

Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the communication device 20 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication device 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensor device.

It may be understood that, a composition structure shown in FIG. 2 does not constitute a limitation on the communication device. In addition to the components shown in FIG. 2, the communication device may include more or fewer components than those shown in the figure, or a combination of some components, or splits from some components, or a different component layout.

The following describes the method provided in embodiments of this application with reference to FIG. 3 to FIG. 7. Devices in the following embodiments may have components shown in FIG. 2. Details are not described again.

It may be understood that in the methods shown in FIG. 3 to FIG. 7, an example in which a server, an electronic device, and a vehicle-mounted control device are used as execution bodies of interaction illustration is used to illustrate the methods. However, the execution bodies of the interaction illustration are not limited in this application. For example, the server in the methods shown in FIG. 3 to FIG. 7 may alternatively be a chip, a chip system, or a processor that supports the server in implementing the methods, or may be a logical module or software that can implement all or some functions of the server. The electronic device in the methods shown in FIG. 3 to FIG. 7 may alternatively be a chip, a chip system, or a processor that supports the electronic device in implementing the methods, or may be a logical module or software that can implement all or some functions of the electronic device. The vehicle-mounted control device in the methods shown in FIG. 3 to FIG. 7 may alternatively be a chip, a chip system, or a processor that supports the vehicle-mounted control device in implementing the methods, or may be a logical module or software that can implement all or some functions of the vehicle-mounted control device.

It may be understood that names of messages between devices, names of parameters in the messages, or the like in the following embodiments of this application are merely examples, and there may be other names in a specific implementation. This is not specifically limited in embodiments of this application.

It may be understood that, in embodiments of this application, "/" may represent an "or" relationship between associated objects. For example, A/B may represent A or B. "And/or" may be used to describe three relationships that exist between the associated objects. For example, A and/or B may represent the following three cases: Only A exists, both A and B exist, and only B exists. A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of describing the technical solutions in embodiments of this application, in embodiments of this application, terms such as "first" and "second" may be used to distinguish between technical features with a same function or similar functions. The terms such as "first" and "second" do not limit a quantity and an execution sequence, and the terms such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a necessary determining action in an implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

It may be understood that, a same step or steps or technical features that have a same function in embodiments of this application may be mutually referenced in different embodiments.

It may be understood that in embodiments of this application, the server, and/or the electronic device, and/or the vehicle-mounted control device may perform some or all of steps in embodiments of this application. These steps are merely examples. In embodiments of this application, other steps or variations of various steps may be further performed. In addition, the steps may be performed in different sequences presented in embodiments of this application, and not all steps in embodiments of this application need to be performed.

FIG. 3 shows a vehicle-mounted device upgrade method according to an embodiment of this application. The method may include the following steps.

S301: An electronic device sends first signature information and first public key information to a server. Correspondingly, the server receives the first signature information and the first public key information from the electronic device.

In this embodiment of this application, the electronic device may be the electronic device 102 in FIG. 1A, and the server may be the server 101 in FIG. 1A; or the electronic device may be the electronic device in FIG. 1B, and the server may be the server in FIG. 1B.

The following separately describes the first signature information and the first public key information.

In this embodiment of this application, the first signature information is obtained by signing a first upgrade request based on a private key of the electronic device. The first upgrade request is used to request an upgrade package of at least one vehicle-mounted device. The at least one vehicle-mounted device may be the to-be-upgraded device in FIG. 1B.

In an example, the first upgrade request includes at least one flag bit, the at least one flag bit is in one-to-one correspondence with the at least one vehicle-mounted device, and any one of the at least one flag bit is used to request an upgrade package of a vehicle-mounted device corresponding to the flag bit.

In another example, the first upgrade request includes identification information of each of the at least one vehicle-mounted device.

Optionally, the first upgrade request further includes upgrade information of the at least one vehicle-mounted device. For example, the upgrade information of the at least one vehicle-mounted device includes at least one of the following: a name of software currently installed on the at least one vehicle-mounted device, version information of the software, a name of the at least one vehicle-mounted device, information about a developer of the software, or an identifier of a vehicle in which the at least one vehicle-mounted device is located.

Optionally, the upgrade information may be obtained by the electronic device from a vehicle-mounted control device. For example, before S301, the vehicle-mounted control device sends the upgrade information to the electronic device. Correspondingly, the electronic device receives the upgrade information.

It may be understood that the upgrade information of the at least one vehicle-mounted device may enable the server to determine whether the at least one vehicle-mounted device needs to be upgraded, or enable the server to verify adaptation between the upgrade package and the at least one vehicle-mounted device. For example, if version information of latest released software stored in the server is the same as the version information in the upgrade information, the server determines that the at least one vehicle-mounted device does not need to be upgraded; or if version information of latest released software stored in the server is later than the version information in the upgrade information, the server determines that the at least one vehicle-mounted device needs to be upgraded.

Optionally, the server stores the upgrade information. In this case, the first upgrade request may not include the upgrade information. After receiving the first signature information, the server may locally search the upgrade information, to determine whether the at least one vehicle-mounted device needs to be upgraded.

In this embodiment of this application, the first public key information is used to verify an identity of the electronic device, or the first public key information is used to verify whether the electronic device is valid. For example, the first public key information includes a public key certificate of a public key of the electronic device, or the first public key information includes a public key of the electronic device. In this way, based on the public key certificate or the public key of the electronic device, the server may verify the identity of the electronic device or verify whether the electronic device is valid.

The public key certificate may include at least one of the following: the upgrade information of the at least one vehicle-mounted device, an identifier of the vehicle-mounted control device, an identifier of the server, an identifier of the electronic device, an authorization period, or authorization purpose information. The authorization period may include long-term, short-term, or one-time authorization. One-time authorization means that the public key certificate can be verified once. Alternatively, the authorization period includes one month, two months, half a year, or one year. It may be understood that long-term authorization may enable the public key certificate to be used for a long time, and the public key certificate does not need to be generated frequently. Short-term authorization or one-time authorization requires frequent generation of the public key certificate, but has high security. In addition, for one-time authorization, authorization does not need to be canceled.

Optionally, the public key certificate further includes a label, for example, a digital signature, that protects integrity and source authenticity of all or a part of the foregoing information.

It may be understood that, if the public key certificate does not include the authorization period, the public key certificate may implicitly indicate the authorization period. For example, if the public key certificate includes the upgrade information of the at least one vehicle-mounted device, it indicates that the authorization period of the public key certificate is short-term or one-time authorization. Optionally, if the public key certificate includes the upgrade information of the at least one vehicle-mounted device, it indicates that the public key certificate is used to upgrade the vehicle-mounted device, and cannot be used for another service other than a vehicle-mounted device upgrade service.

In a possible design, the public key certificate includes at least one field, and the information may be included in a corresponding field. For example, the public key certificate includes at least one of an issuer (Issuer) field, a validity (Validity) field, or an extended key usage field (Extended key usage field). The issuer field may include information related to an authorizer, for example, the identifier of the vehicle-mounted control device or the identifier of the server. The validity field may include the authorization period or the like. The extended key usage field may include information other than the information about the authorizer and the authorization period, for example, the identifier of the electronic device, the upgrade information of the at least one vehicle-mounted device, and the authorization purpose information.

It may be understood that, within the authorization period, the server may cancel authorization on the electronic device based on a conventional public key certificate cancellation mechanism, for example, put the public key certificate into a certificate cancellation list.

It may be understood that the foregoing fields are merely examples of the fields included in the public key certificate. In specific application, the public key certificate may include more or fewer fields than those in the foregoing example. This is not limited.

In a possible implementation, the public key certificate is generated based on a private key of the server, or the public key certificate is generated based on a private key of the vehicle-mounted control device. The vehicle-mounted control device is the vehicle-mounted control device 103 in FIG. 1A, or the vehicle-mounted control device in FIG. 1B.

S302: When verification of the first signature information and the first public key information succeeds, the server sends the upgrade package of the at least one vehicle-mounted device to the electronic device. Correspondingly, the electronic device receives the upgrade package of the at least one vehicle-mounted device from the server.

It may be understood that, after receiving the first signature information and the first public key information, the server may verify the first signature information and the first public key information, and when verification of the first signature information and the first public key information succeeds, send the upgrade package of the at least one vehicle-mounted device to the electronic device.

In an example, the server verifies the first signature information based on the public key of the electronic device. If verification of the first signature information succeeds, it indicates that the first signature information is not tampered with; or if verification of the first signature information fails, it indicates that the first signature information is tampered with.

In another example, if the first public key information includes the public key certificate of the public key of the electronic device, and the public key certificate is generated based on the private key of the server, the server verifies the public key certificate based on a public key of the server. Alternatively, if the first public key information includes the public key certificate of the public key of the electronic device, and the public key certificate is generated based on the private key of the vehicle-mounted control device, the server verifies the public key certificate based on a public key of the vehicle-mounted control device (before S302, the server may obtain the public key of the vehicle-mounted control device from the vehicle-mounted control device). It may be understood that the public key of the server or the public key of the vehicle-mounted control device may have respective public key certificates. The public key certificate may be verified based on a public key of another device, and the public key of the another device may have a public key certificate. By analogy, a certificate chain may be formed. Finally, validity of another certificate in the certificate chain is verified based on a root certificate in the certificate chain. It should be understood that, if verification of the public key certificate succeeds, it indicates that the electronic device is valid, or the electronic device is authorized to download the upgrade package; or if verification of the public key certificate fails, it indicates that the electronic device is invalid, or the electronic device is not authorized to download the upgrade package.

In another example, if the first public key information includes the public key of the electronic device, the server verifies the public key of the electronic device based on authorization information of the public key of the electronic device. The authorization information of the public key of the electronic device indicates whether the public key of the electronic device is authorized or whether the electronic device is valid. For example, if the authorization information includes the public key of the electronic device, the authorization information indicates that the public key of the electronic device is authorized or the electronic device is valid; or if the authorization information does not include the public key of the electronic device, the authorization information indicates that the public key of the electronic device is not authorized or the electronic device is invalid. For another example, the authorization information includes a flag bit, and the flag bit indicates whether the public key of the electronic device is authorized or whether the electronic device is valid. For another example, the authorization information includes the public key of the electronic device and a flag bit corresponding to the public key, and the flag bit indicates whether the public key of the electronic device is authorized or whether the electronic device is valid.

It may be understood that the server verifies validity of the electronic device based on the authorization information, thereby avoiding verification of the electronic device in a form of a certificate chain, and improving verification efficiency.

It may be understood that, within the authorization period, if the server wants to cancel authorization on the electronic device, the server may delete the authorization information.

S303: The electronic device sends the upgrade package of the at least one vehicle-mounted device to the vehicle-mounted control device. Correspondingly, the vehicle-mounted control device receives the upgrade package of the at least one vehicle-mounted device from the electronic device.

It may be understood that the electronic device may send the upgrade package of the at least one vehicle-mounted device to the vehicle-mounted control device at an appropriate time (for example, when a network of the vehicle-mounted control device is idle or the vehicle-mounted control device is connected to a network).

It may be understood that, requesting the upgrade package from the server by the vehicle-mounted control device via the electronic device has the following advantages: (1) Overheads of an in-vehicle network may be reduced; (2) when the vehicle-mounted control device cannot perform communication, the electronic device may obtain the upgrade package in time; and (3) when a user (for example, an owner of the vehicle or an owner of the electronic device) is not in the vehicle and cannot operate the vehicle-mounted control device, the electronic device may obtain the upgrade package in time.

S304: The vehicle-mounted control device separately sends an upgrade package of each vehicle-mounted device to the at least one vehicle-mounted device. Correspondingly, each vehicle-mounted device receives the upgrade package.

It may be understood that after receiving the upgrade package of the vehicle-mounted device, the vehicle-mounted device may perform upgrade.

Operations of the electronic device, the server, or the vehicle-mounted control device in S301 to S304 may be performed by the processor 201 in the communication device 20 shown in FIG. 2 by invoking application program code stored in the memory 203. This is not limited in embodiments of this application.

Based on the method shown in FIG. 3, the server may verify validity of the electronic device based on the first public key information, for example, whether the electronic device has permission to download the upgrade package, and verify, based on the first signature information, whether received information is tampered with, to ensure security of upgrading the vehicle-mounted device.

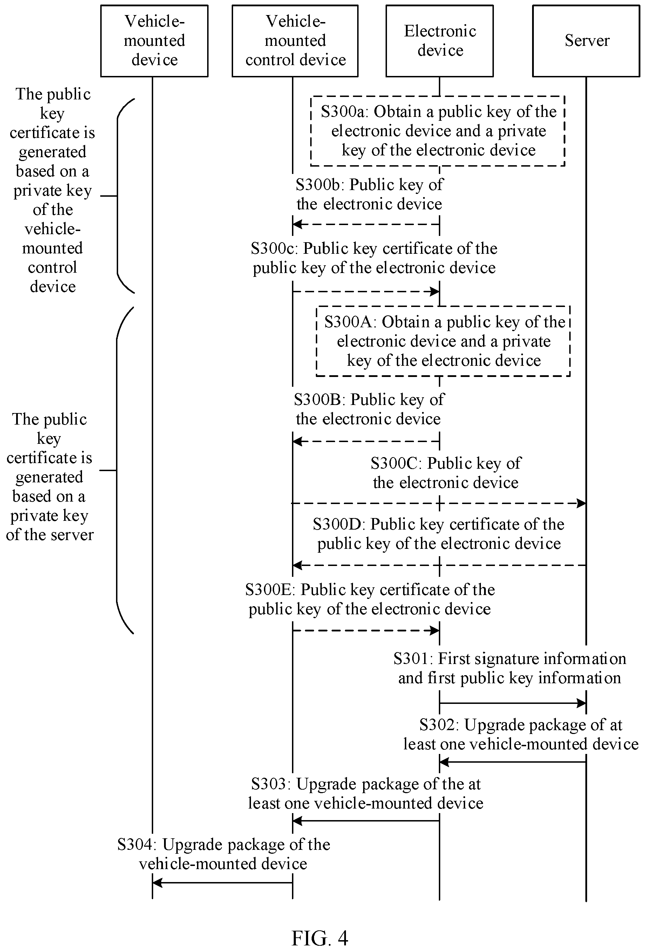

Optionally, in a possible scenario of the method shown in FIG. 3, the public key certificate is generated by the vehicle-mounted control device or the server for the electronic device. Specifically, as shown in FIG. 4, if the first public key information includes the public key certificate of the public key of the electronic device, the method shown in FIG. 3 further includes S300a to S300c or S300A to S300E.

S300a: The electronic device obtains the public key of the electronic device and the private key of the electronic device.

In a possible implementation, the electronic device generates the public key of the electronic device and the private key of the electronic device. Alternatively, a key generation apparatus generates the public key of the electronic device and the private key of the electronic device for the electronic device, and sends the public key and the private key to the electronic device. Correspondingly, the electronic device receives the public key and the private key.

S300b: The electronic device sends the public key of the electronic device to the vehicle-mounted control device. Correspondingly, the vehicle-mounted control device receives the public key of the electronic device from the electronic device.

S300c: The vehicle-mounted control device sends the public key certificate of the public key of the electronic device to the electronic device. Correspondingly, the electronic device receives the public key certificate.

In a possible implementation, the vehicle-mounted control device, as an authorizer, generates the public key certificate for the public key (authorized party) of the electronic device based on the private key of the vehicle-mounted control device. Alternatively, the vehicle-mounted control device generates the public key certificate for the public key of the electronic device based on the private key of the vehicle-mounted control device via a certificate authority. It may be understood that the public key certificate may be used as an authorization letter.

It may be understood that, based on S300a to S300c, the vehicle-mounted control device may generate the authorization letter (for example, the public key certificate of the public key of the electronic device) for the electronic device. Then, the electronic device may request the upgrade package from the server based on the authorization letter. Because the authorization letter cannot be modified and cannot be forged, upgrade security of the vehicle-mounted device can be ensured by using the authorization letter as a credential for proving, by the electronic device to the server, validity of the electronic device.

S300A: The electronic device obtains the public key of the electronic device and the private key of the electronic device.

S300B: The electronic device sends the public key of the electronic device to the vehicle-mounted control device. Correspondingly, the vehicle-mounted control device receives the public key of the electronic device from the electronic device.

A process of S300A and S300B is similar to a process of S300a and S300b. Therefore, refer to corresponding descriptions in S300a and S300b. Details are not described herein again.

S300C: The vehicle-mounted control device sends the public key of the electronic device to the server. Correspondingly, the server receives the public key of the electronic device from the vehicle-mounted control device.

S300D: The server sends the public key certificate of the public key of the electronic device to the vehicle-mounted control device. Correspondingly, the vehicle-mounted control device receives the public key certificate.

In a possible implementation, the server, as an authorizer, generates the public key certificate for the public key (authorized party) of the electronic device based on the private key of the server. Alternatively, the server generates the public key certificate for the public key of the electronic device based on the private key of the server via a certificate authority. It may be understood that the public key certificate may be used as an authorization letter.

In an example, the vehicle-mounted control device may log in to the server by using the private key of the vehicle-mounted control device as identity authentication, to apply for the public key certificate for the public key of the electronic device. The server may generate the public key certificate for the public key of the electronic device based on the private key of the server, or invoke a third-party certificate authority to generate the public key certificate for the public key of the electronic device based on the private key of the server.

S300E: The vehicle-mounted control device sends the public key certificate of the public key of the electronic device to the electronic device. Correspondingly, the electronic device receives the public key certificate.

It may be understood that, based on S300A to S300E, the server may generate the authorization letter (for example, the public key certificate of the public key of the electronic device) for the electronic device. Then, the electronic device may request the upgrade package from the server based on the authorization letter. Because the authorization letter cannot be modified and cannot be forged, upgrade security of the vehicle-mounted device can be ensured by using the authorization letter as a credential for proving, by the electronic device to the server, validity of the electronic device.

Operations of the electronic device, the vehicle-mounted control device, or the server in S300a to S300E may be performed by the processor 201 in the communication device 20 shown in FIG. 2 by invoking application program code stored in the memory 203. This is not limited in embodiments of this application.

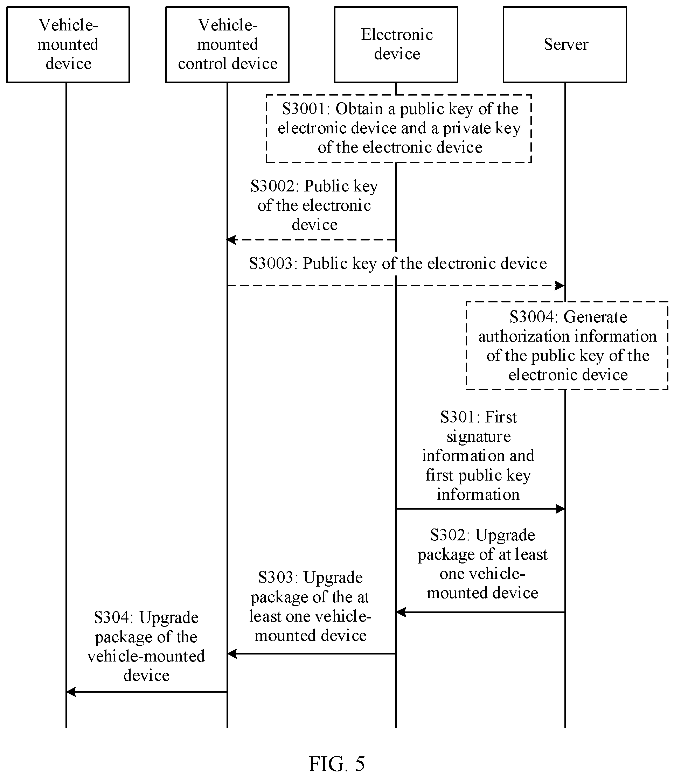

Optionally, in a possible scenario of the method shown in FIG. 3, the server may generate the authorization information for the public key of the electronic device. Specifically, as shown in FIG. 5, if the first public key information includes the public key of the electronic device, the method shown in FIG. 3 further includes S3001 to S3004.

S3001: The electronic device obtains the public key of the electronic device and the private key of the electronic device.

S3002: The electronic device sends the public key of the electronic device to the vehicle-mounted control device. Correspondingly, the vehicle-mounted control device receives the public key of the electronic device from the electronic device.

A process of S3001 and S3002 is similar to a process of S300a and S300b. Therefore, refer to corresponding descriptions in S300a and S300b. Details are not described herein again.

S3003: The vehicle-mounted control device sends the public key of the electronic device to the server. Correspondingly, the server receives the public key of the electronic device from the vehicle-mounted control device.

Optionally, the vehicle-mounted control device further sends first indication information to the server. Correspondingly, the server receives the first indication information. The first indication information indicates authorization information for generating the public key of the electronic device.

For example, the first indication information includes one bit, and when a value of the one bit is "0" or "1", the first indication information indicates the authorization information for generating the public key of the electronic device.

S3004: The server generates the authorization information of the public key of the electronic device.

In an example, the vehicle-mounted control device may log in to the server by using the private key of the vehicle-mounted control device as identity authentication, and requests to authorize the public key of the electronic device. The server may generate and store the authorization information. In this way, after receiving the upgrade request sent by the electronic device, the server may query the authorization information, to verify whether the electronic device is valid.

It may be understood that, based on S3001 to S3004, the server may generate the authorization information for the public key of the electronic device. In this way, when the electronic device requests the upgrade package from the server, the server does not need the public key certificate to verify validity of the electronic device, but verifies validity of the electronic device based on the authorization information. A certificate chain is not required in an entire verification process, and verification efficiency is high.

Operations of the electronic device, the vehicle-mounted control device, or the server in S3001 to S3004 may be performed by the processor 201 in the communication device 20 shown in FIG. 2 by invoking application program code stored in the memory 203. This is not limited in embodiments of this application.

It may be understood that in the methods shown in FIG. 3 to FIG. 5, the server verifies, based on the public key certificate or the authorization information of the public key of the electronic device, whether the identity of the electronic device is valid. In specific application, an identity credential may be generated for the electronic device in a proxy signature (proxy signature) manner, so that the server verifies validity of the electronic device.

The proxy signature involves an original signer and a proxy signer. The original signer authorizes a signature capability of the original signer to the proxy signer by generating a proxy signature key (proxy signature key) for the proxy signer. The proxy signature key may be generated based on a private key of the original signer or a private key of the proxy signer. If the private key of the proxy signer is used to generate the proxy signature key, the original signer and the proxy signer need to interact to generate the proxy signature key together. If the private key of the proxy signer is not used to generate the proxy signature key, the proxy signature key is usually generated by the original signer independently. This embodiment of this application is described by using an example in which the original signer is used to generate the proxy signature key independently.

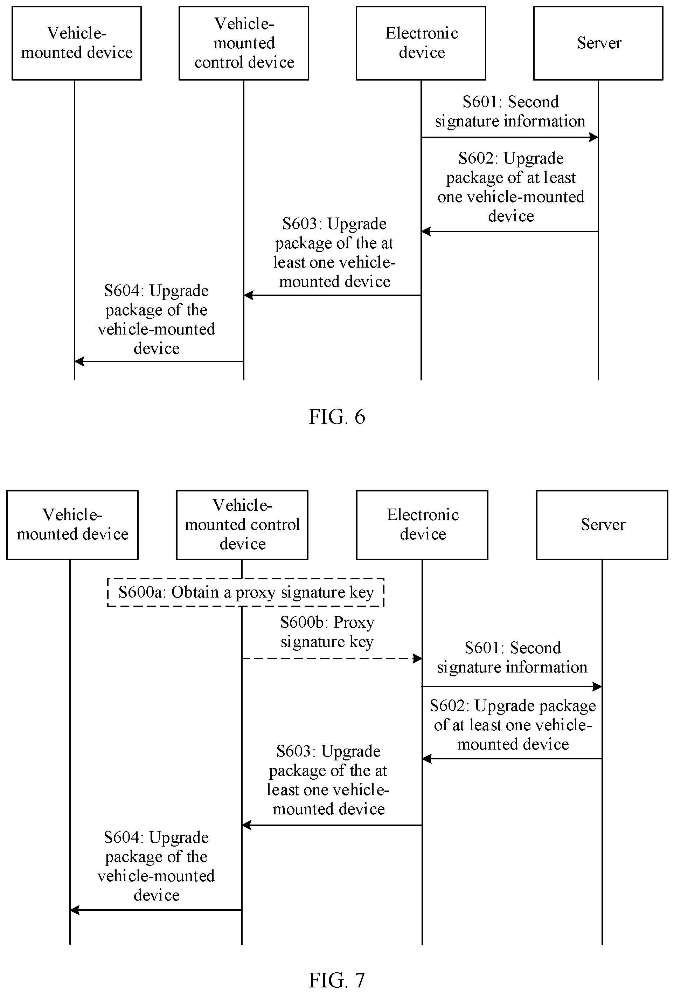

FIG. 6 shows still another vehicle-mounted device upgrade method according to an embodiment of this application. The method may include the following steps.

S601: An electronic device sends second signature information to a server. Correspondingly, the server receives the second signature information from the electronic device.

In this embodiment of this application, the electronic device may be the electronic device 102 in FIG. 1A, and the server may be the server 101 in FIG. 1A; or the electronic device may be the electronic device in FIG. 1B, and the server may be the server in FIG. 1B.

In this embodiment of this application, the second signature information is used to verify an identity of the electronic device. The second signature information is obtained by signing a first upgrade request based on a proxy signature key. The proxy signature key is obtained based on a private key of a vehicle-mounted control device and authorization information of the proxy signature key. For example, the proxy signature key may be calculated based on a hash value of the authorization information corresponding to an algorithm and the private key of the vehicle-mounted control device. The authorization information may alternatively be referred to as a warranty (warranty). For descriptions of the first upgrade request, refer to the corresponding descriptions in S301. Details are not described herein again.

In this embodiment of this application, the authorization information of the proxy signature key may include at least one of the following: upgrade information of at least one vehicle-mounted device, an identifier of the vehicle-mounted control device, an identifier of the server, an identifier of the electronic device, an authorization period, or authorization purpose information. For descriptions of the upgrade information of the at least one vehicle-mounted device and the authorization period, refer to corresponding descriptions in S301. Details are not described herein again.

S602: When verification of the second signature information succeeds, the server sends an upgrade package of the at least one vehicle-mounted device to the electronic device. Correspondingly, the electronic device receives the upgrade package of the at least one vehicle-mounted device from the server.

It may be understood that, after receiving the second signature information, the server may verify the second signature information, and when verification of the second signature information succeeds, send the upgrade package of the at least one vehicle-mounted device to the electronic device.

In a possible implementation, the server verifies the second signature information based on a public key of the vehicle-mounted control device. It may be understood that the proxy signature key is obtained based on the private key of the vehicle-mounted control device and the authorization information of the proxy signature key, and the second signature information is obtained by signing the first upgrade request based on the proxy signature key. Therefore, the server may verify the second signature information based on the public key of the vehicle-mounted control device.

It may be understood that, if verification of the second signature information succeeds, it indicates that the electronic device is valid, or the electronic device is authorized to download the upgrade package, and received information is not tampered with; or if verification of the second signature information fails, it indicates that the electronic device is invalid, or the electronic device is not authorized to download the upgrade package, or received information is tampered with.

In a possible implementation, within the authorization period, if the server needs to cancel authorization on the electronic device, the server may store the authorization information in an authorization information cancellation list.

S603: The electronic device sends the upgrade package of the at least one vehicle-mounted device to the vehicle-mounted control device. Correspondingly, the vehicle-mounted control device receives the upgrade package of the at least one vehicle-mounted device from the electronic device.

S604: The vehicle-mounted control device separately sends an upgrade package of each vehicle-mounted device to the at least one vehicle-mounted device. Correspondingly, each vehicle-mounted device receives the upgrade package.

A process of S603 and S604 is similar to a process of S303 and S304. Therefore, refer to corresponding descriptions in S303 and S304. Details are not described herein again.

Operations of the electronic device, the server, or the vehicle-mounted control device in S601 to S604 may be performed by the processor 201 in the communication device 20 shown in FIG. 2 by invoking application program code stored in the memory 203. This is not limited in embodiments of this application.

Based on the method shown in FIG. 6, the server may verify validity of the electronic device based on the second signature information, for example, whether the electronic device has permission to download an upgrade package, and verify whether received information is tampered with, to ensure security of upgrading the vehicle-mounted device.

Optionally, in a possible scenario of the method shown in FIG. 6, the vehicle-mounted control apparatus generates the proxy signature key for the electronic device. Specifically, as shown in FIG. 7, the method shown in FIG. 6 further includes the following steps.

S600a: The vehicle-mounted control device obtains the proxy signature key.

In a possible implementation, the vehicle-mounted control device, as an original signer, generates the proxy signature key for the electronic device (as a proxy signer) based on the private key of the vehicle-mounted control device. The proxy signature key includes authorization information of the proxy signature key. The proxy signature key may be used as an authorization letter for the server to verify validity of the electronic device.

S600b: The vehicle-mounted control device sends the proxy signature key to the electronic device. Correspondingly, the electronic device receives the proxy signature key from the vehicle-mounted control device.

It may be understood that the vehicle-mounted control device may generate the authorization letter (for example, the proxy signature key) for the electronic device based on S600a and S600b. Then, the electronic device may request the upgrade package from the server based on the authorization letter. Because the authorization letter cannot be modified and cannot be forged, upgrade security of the vehicle-mounted device can be ensured by using the authorization letter as a credential for proving, by the electronic device to the server, validity of the electronic device. In addition, generation of the authorization letter does not require participation of the server, and this process is simple and practical. In addition, validity of a digital signature (for example, the second signature information) generated based on the proxy signature key is verified by a public key of the original signer (the vehicle-mounted control device), and a public key certificate of an authorized party (the electronic device) is not involved. Compared with a method in which authentication is performed based on a public key certificate of a public key of the electronic device, a length of a certificate chain is reduced, and verification efficiency can be improved.

Operations of the electronic device or the vehicle-mounted control device in S600a and S600b may be performed by the processor 201 in the communication device 20 shown in FIG. 2 by invoking application program code stored in the memory 203. This is not limited in embodiments of this application.

Embodiments mentioned above in this application may be combined on a premise that solutions are not contradictory. This is not limited.

The foregoing mainly describes the solutions provided in embodiments of this application from a perspective of device interaction. Correspondingly, an embodiment of this application further provides a communication device. The communication device may be the server in the foregoing method embodiments, or an apparatus including the foregoing server, or a component that can be used in the server. Alternatively, the communication device may be the electronic device in the foregoing method embodiments, or an apparatus including the foregoing electronic device, or a component that can be used in the electronic device. Alternatively, the communication device may be the vehicle-mounted control device in the foregoing method embodiments, or an apparatus including the foregoing vehicle-mounted control device, or a component that can be used in the vehicle-mounted control device. It may be understood that, to implement the foregoing functions, the server, the electronic device, the vehicle-mounted control device, or the like includes a corresponding hardware structure and/or software module for performing each of the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the server, the electronic device, or the vehicle-mounted control device may be divided into function modules based on the foregoing method examples. For example, each function module may be obtained through division for each corresponding function, or two or more functions may be integrated into one processing module. The integrated module may be implemented in a form of hardware, or may be implemented in a form of a software functional module. It may be understood that, in embodiments of this application, module division is an example, and is merely a logical function division. In an actual implementation, another division manner may be used.

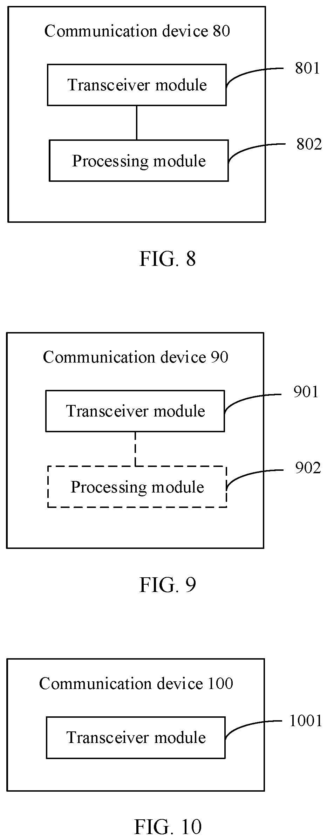

For example, when the function modules are obtained through division in an integrated manner, FIG. 8 is a diagram of a structure of a communication device 80. The communication device 80 includes a transceiver module 801 and a processing module 802. The transceiver module 801 may also be referred to as a transceiver unit, is configured to perform sending and receiving operations, and for example, may be a transceiver circuit, a transceiver machine, a transceiver, or a communication interface. The processing module 802 may also be referred to as a processing unit, is configured to perform an operation other than the sending and receiving operations, and for example, may be a processing circuit or a processor.

In some embodiments, the communication device 80 may further include a storage module (not shown in FIG. 8), configured to store program instructions and data.

For example, the communication device 80 is configured to implement functions of a server. The communication device 80 is, for example, the server in the embodiment shown in FIG. 3, the embodiment shown in FIG. 4, or the embodiment shown in FIG. 5.

The transceiver module 801 is configured to receive first signature information and first public key information from an electronic device. The first signature information is obtained by signing a first upgrade request based on a private key of the electronic device, the first upgrade request is used to request an upgrade package of at least one vehicle-mounted device, the first public key information is used to verify an identity of the electronic device, and the first public key information includes a public key certificate of a public key of the electronic device, or the first public key information includes a public key of the electronic device. For example, the transceiver module 801 may be configured to perform S301.

The processing module 802 is configured to: when verification of the first signature information and the first public key information succeeds, send the upgrade package to the electronic device via the transceiver module 801. For example, the processing module 802 may be configured to perform S302.

In a possible implementation, the processing module 802 is further configured to verify the first signature information based on the public key of the electronic device.

In a possible implementation, the transceiver module 801 is further configured to receive the public key of the electronic device from a vehicle-mounted control device; and the transceiver module 801 is further configured to send the public key certificate to the vehicle-mounted control device, where the public key certificate is generated based on a private key of the communication device 80.

In a possible implementation, the processing module 802 is further configured to verify the public key certificate based on a public key of the communication device 80.

In a possible implementation, the public key certificate is generated based on a private key of the vehicle-mounted control device, and the processing module 802 is further configured to verify the public key certificate based on a public key of the vehicle-mounted control device.

In a possible implementation, the transceiver module 801 is further configured to receive the public key of the electronic device from the vehicle-mounted control device; and the processing module 802 is further configured to generate authorization information of the public key of the electronic device.

In a possible implementation, the processing module 802 is further configured to verify the public key of the electronic device based on the authorization information.

In a possible implementation, the processing module 802 is further configured to delete the authorization information.

In a possible implementation, the first upgrade request includes upgrade information of the at least one vehicle-mounted device.

In a possible implementation, the public key certificate includes at least one of the following: the upgrade information of the at least one vehicle-mounted device, an identifier of the vehicle-mounted control device, an identifier of the communication device 80, an identifier of the electronic device, an authorization period, or authorization purpose information.

When the communication device 80 is configured to implement functions of the server, for other functions that can be implemented by the communication device 80, refer to related descriptions of the embodiment shown in FIG. 3, the method embodiment shown in FIG. 4, or the embodiment shown in FIG. 5. Details are not described again.

Alternatively, for example, the communication device 80 is configured to implement functions of a server. The communication device 80 is, for example, the server in the embodiment shown in FIG. 6 or the embodiment shown in FIG. 7.

The transceiver module 801 is configured to receive second signature information from an electronic device. The second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device. For example, the transceiver module 801 may be configured to perform S601.

The processing module 802 is configured to: when verification of the second signature information succeeds, send the upgrade package to the electronic device via the transceiver module 801. For example, the processing module 802 may be configured to perform S602.

In a possible implementation, the processing module 802 is further configured to verify the second signature information based on a public key of the vehicle-mounted control device.

In a possible implementation, the processing module 802 is further configured to store the authorization information in an authorization information cancellation list.

In a possible implementation, the first upgrade request includes upgrade information of the at least one vehicle-mounted device.

In a possible implementation, the authorization information includes at least one of the following: the upgrade information of the at least one vehicle-mounted device, an identifier of the vehicle-mounted control device, an identifier of the communication device 80, an identifier of the electronic device, an authorization period, or authorization purpose information.

When the communication device 80 is configured to implement functions of the server, for other functions that can be implemented by the communication device 80, refer to related descriptions of the embodiment shown in FIG. 6 or the embodiment shown in FIG. 7. Details are not described again.

Alternatively, for example, the communication device 80 is configured to implement functions of a vehicle-mounted control device. The communication device 80 is, for example, the vehicle-mounted control device in the embodiment shown in FIG. 7.

The processing module 802 is configured to obtain a proxy signature key. The proxy signature key is obtained based on a private key of the communication device 80 and authorization information of the proxy signature key. For example, a processing module 802 may be configured to perform S600a.

A transceiver module 801 is configured to send the proxy signature key to an electronic device. For example, the transceiver module 801 may be configured to perform S600b.

In a possible implementation, the authorization information includes at least one of the following: upgrade information of at least one vehicle-mounted device, an identifier of the communication device 80, an identifier of a server, an identifier of the electronic device, an authorization period, or authorization purpose information.

In a possible implementation, the transceiver module 801 is further configured to send the upgrade information of the at least one vehicle-mounted device to the electronic device.

When the communication device 80 is configured to implement functions of the vehicle-mounted control device, for other functions that can be implemented by the communication device 80, refer to related descriptions of the embodiment shown in FIG. 7. Details are not described again.

In a simple embodiment, a person skilled in the art may figure out that the communication device 80 may be in the form shown in FIG. 2. For example, the processor 201 in FIG. 2 may invoke the computer-executable instructions stored in the memory 203, to enable the communication device 80 to perform the method in the foregoing method embodiments.

For example, functions/implementation processes of the transceiver module 801 and the processing module 802 in FIG. 8 may be implemented by the processor 201 in FIG. 2 by invoking the computer-executable instructions stored in the memory 203. Alternatively, a function/implementation process of the processing module 802 in FIG. 8 may be implemented by the processor 201 in FIG. 2 by invoking the computer-executable instructions stored in the memory 203, and a function/implementation process of the transceiver module 801 in FIG. 8 may be implemented by the communication interface 204 in FIG. 2.

For example, when the function modules are obtained through division in an integrated manner, FIG. 9 is a diagram of a structure of a communication device 90. The communication device 90 includes a transceiver module 901. Optionally, the communication device 90 further includes a processing module 902. The transceiver module 901 may also be referred to as a transceiver unit, is configured to perform sending and receiving operations, and for example, may be a transceiver circuit, a transceiver machine, a transceiver, or a communication interface. The processing module 902 may also be referred to as a processing unit, is configured to perform an operation other than the sending and receiving operations, and for example, may be a processing circuit or a processor.

In some embodiments, the communication device 90 may further include a storage module (not shown in FIG. 9), configured to store program instructions and data.

For example, the communication device 90 is configured to implement functions of an electronic device. The communication device 90 is, for example, the electronic device in the embodiment shown in FIG. 3, the embodiment shown in FIG. 4, or the embodiment shown in FIG. 5.

The transceiver module 901 is configured to send first signature information and first public key information to a server. The first signature information is obtained by signing a first upgrade request based on a private key of the communication device 90, the first upgrade request is used to request an upgrade package of at least one vehicle-mounted device, the first public key information is used to verify an identity of the communication device 90, and the first public key information includes a public key certificate of a public key of the communication device 90, or the first public key information includes a public key of the communication device 90. For example, the transceiver module 901 may be configured to perform S301.

The transceiver module 901 is further configured to receive the upgrade package from the server. For example, the transceiver module 901 may be configured to perform S302.

The transceiver module 901 is further configured to send the upgrade package to a vehicle-mounted control device. For example, the transceiver module 901 may be configured to perform S303.

In a possible implementation, the transceiver module 901 is further configured to receive the public key certificate from the vehicle-mounted control device, where the public key certificate is generated based on a private key of the vehicle-mounted control device, or the public key certificate is generated based on a private key of the server.

In a possible implementation, the processing module 902 is configured to obtain the public key of the communication device 90 and the private key of the communication device 90; and the transceiver module 901 is further configured to send the public key of the communication device 90 to the vehicle-mounted control device.

In a possible implementation, the first upgrade request includes upgrade information of the at least one vehicle-mounted device.

In a possible implementation, the public key certificate includes at least one of the following: the upgrade information of the at least one vehicle-mounted device, an identifier of the vehicle-mounted control device, an identifier of the server, an identifier of the communication device 90, an authorization period, or authorization purpose information.

In a possible implementation, the transceiver module 901 is further configured to receive the upgrade information of the at least one vehicle-mounted device from the vehicle-mounted control device.

When the communication device 90 is configured to implement functions of the electronic device, for other functions that can be implemented by the communication device 90, refer to related descriptions of the embodiment shown in FIG. 3, the method embodiment shown in FIG. 4, or the embodiment shown in FIG. 5. Details are not described again.

In a simple embodiment, a person skilled in the art may figure out that the communication device 90 may be in the form shown in FIG. 2. For example, the processor 201 in FIG. 2 may invoke the computer-executable instructions stored in the memory 203, to enable the communication device 90 to perform the method in the foregoing method embodiments.

For example, functions/implementation processes of the transceiver module 901 and the processing module 902 in FIG. 9 may be implemented by the processor 201 in FIG. 2 by invoking the computer-executable instructions stored in the memory 203. Alternatively, a function/implementation process of the processing module 902 in FIG. 9 may be implemented by the processor 201 in FIG. 2 by invoking the computer-executable instructions stored in the memory 203, and a function/implementation process of the transceiver module 901 in FIG. 9 may be implemented by the communication interface 204 in FIG. 2.

For example, when the function modules are obtained through division in an integrated manner, FIG. 10 is a diagram of a structure of a communication device 100. The communication device 100 includes a transceiver module 1001. The transceiver module 1001 may also be referred to as a transceiver unit, is configured to perform sending and receiving operations, and for example, may be a transceiver circuit, a transceiver machine, a transceiver, or a communication interface.

For example, the communication device 100 is configured to implement functions of a vehicle-mounted control device. The communication device 100 is, for example, the vehicle-mounted control device in the embodiment shown in FIG. 4.

The transceiver module 1001 is configured to receive a public key of an electronic device from the electronic device. For example, the transceiver module 1001 may be configured to perform S300b or S300B.

The transceiver module 1001 is configured to send a public key certificate of the public key of the electronic device to the electronic device, where the public key certificate is generated based on a private key of the communication device 100, or the public key certificate is generated based on a private key of a server. For example, the transceiver module 1001 may be configured to perform S300c or S300E.

In a possible implementation, the public key certificate is generated based on the private key of the server. The transceiver module 1001 is further configured to send the public key of the electronic device to the server. The transceiver module 1001 is further configured to receive the public key certificate from the server.

In a possible implementation, the public key certificate includes at least one of the following: upgrade information of at least one vehicle-mounted device, an identifier of the communication device 100, an identifier of the server, an identifier of the electronic device, an authorization period, or authorization purpose information.

In a possible implementation, the transceiver module 1001 is further configured to send the upgrade information of the at least one vehicle-mounted device to the electronic device.

When the communication device 100 is configured to implement functions of the vehicle-mounted control device, for other functions that can be implemented by the communication device 100, refer to related descriptions of the embodiment shown in FIG. 4. Details are not described again.

Alternatively, for example, the communication device 100 is configured to implement functions of a vehicle-mounted control device. The communication device 100 is, for example, the vehicle-mounted control device in the embodiment shown in FIG. 5.

A transceiver module 1001 is configured to receive a public key of an electronic device from the electronic device. For example, the transceiver module 1001 may be configured to perform S3002.

The transceiver module 1001 is further configured to send the public key of the electronic device and first indication information to a server, where the first indication information indicates to generate authorization information for generating the public key of the electronic device. For example, the transceiver module 1001 may be configured to perform S3003.

In a possible implementation, the transceiver module 1001 is further configured to send upgrade information of at least one vehicle-mounted device to the electronic device.

When the communication device 100 is configured to implement functions of the vehicle-mounted control device, for other functions that can be implemented by the communication device 100, refer to related descriptions of the embodiment shown in FIG. 5. Details are not described again.

Alternatively, for example, the communication device 100 is configured to implement functions of an electronic device. The communication device 100 is, for example, the electronic device in the embodiment shown in FIG. 6 or the embodiment shown in FIG. 7.

A transceiver module 1001 is configured to send second signature information to a server. The second signature information is used to verify an identity of the communication device 100. The second signature information is obtained by signing a first upgrade request based on a proxy signature key. The proxy signature key is obtained based on a private key of a vehicle-mounted control device and authorization information of the proxy signature key. The first upgrade request is used to request an upgrade package of at least one vehicle-mounted device. For example, the transceiver module 1001 is configured to perform S601.

The transceiver module 1001 is further configured to receive the upgrade package from the server. For example, the transceiver module 1001 is further configured to perform S602.

The transceiver module 1001 is further configured to send the upgrade package to the vehicle-mounted control device. For example, the transceiver module 1001 is further configured to perform S603.

In a possible implementation, the transceiver module 1001 is further configured to receive the proxy signature key from the vehicle-mounted control device.

In a possible implementation, the first upgrade request includes upgrade information of the at least one vehicle-mounted device.

In a possible implementation, the authorization information includes at least one of the following: the upgrade information of the at least one vehicle-mounted device, an identifier of the vehicle-mounted control device, an identifier of the server, an identifier of the communication device 100, an authorization period, or authorization purpose information.

In a possible implementation, the transceiver module 1001 is further configured to receive the upgrade information of the at least one vehicle-mounted device from the vehicle-mounted control device.

When the communication device 100 is configured to implement functions of the electronic device, for other functions that can be implemented by the communication device 100, refer to related descriptions of the embodiment shown in FIG. 6 or the embodiment shown in FIG. 7. Details are not described again.

In a simple embodiment, a person skilled in the art may figure out that the communication device 100 may be in the form shown in FIG. 2. For example, the processor 201 in FIG. 2 may invoke the computer-executable instructions stored in the memory 203, to enable the communication device 100 to perform the method in the foregoing method embodiments.

For example, a function/implementation process of the transceiver module 1001 in FIG. 10 may be implemented by the processor 201 in FIG. 2 by invoking the computer-executable instructions stored in the memory 203. Alternatively, a function/implementation process of the transceiver module 1001 in FIG. 10 may be implemented by the communication interface 204 in FIG. 2.

It may be understood that, one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (System on Chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or some of the procedures in the foregoing method embodiments may be completed by a computer program instructing related hardware. The program may be stored in the foregoing computer-readable storage medium, and when the program is executed, the procedures in the foregoing method embodiments may be performed. The computer-readable storage medium may be an internal storage unit of the communication device in any one of the foregoing embodiments, for example, a hard disk or a memory of the communication device. The computer-readable storage medium may alternatively be an external storage device of the communication device, for example, a plug-in hard disk, a smart media card (smart media card, SMC), a secure digital (secure digital, SD) card, or a flash card (flash card) configured on the communication device. Further, the computer-readable storage medium may include both an internal storage unit and an external storage device of the communication device. The computer-readable storage medium is configured to store the computer program and other programs and data required by the communication device. The computer-readable storage medium may be further configured to temporarily store data that has been output or is to be output.

Optionally, an embodiment of this application further provides a computer program product. All or some of the procedures in the foregoing method embodiments may be completed by a computer program instructing related hardware. The program may be stored in the computer program product, and when the program is executed, the procedures in the foregoing method embodiments may be performed.

Optionally, an embodiment of this application further provides computer instructions. All or some of the procedures in the foregoing method embodiments may be completed by computer instructions instructing related hardware (such as a computer, a processor, a server, an electronic device, or a vehicle-mounted control device). A program may be stored in the computer-readable storage medium or the computer program product.

Optionally, an embodiment of this application further provides a vehicle, including the vehicle-mounted control device in the foregoing embodiment.

Optionally, an embodiment of this application further provides an upgrade system, including the server, the electronic device, and the vehicle-mounted control device in the embodiment shown in FIG. 3, the embodiment shown in FIG. 4, or the embodiment shown in FIG. 5.

Optionally, an embodiment of this application further provides an upgrade system, including the server, the electronic device, and the vehicle-mounted control device in the embodiment shown in FIG. 6 or the embodiment shown in FIG. 7.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A vehicle-mounted device upgrade method, applied to a server, wherein the method comprises:
receiving first signature information and first public key information from an electronic device, wherein the first signature information is obtained by signing a first upgrade request based on a private key of the electronic device, the first upgrade request is used to request an upgrade package of at least one vehicle-mounted device, the first public key information is used to verify an identity of the electronic device, and the first public key information comprises a public key certificate of a public key of the electronic device, or the first public key information comprises a public key of the electronic device; and
when verification of the first signature information and the first public key information succeeds, sending the upgrade package to the electronic device.

2. The method according to claim **1,** wherein the method further comprises:
verifying the first signature information based on the public key of the electronic device.

3. The method according to claim 1 or 2, wherein the method further comprises:
receiving the public key of the electronic device from a vehicle-mounted control device; and
sending the public key certificate to the vehicle-mounted control device, wherein the public key certificate is generated based on a private key of the server.

4. The method according to claim 3, wherein the method further comprises:
verifying the public key certificate based on a public key of the server.

5. The method according to claim 1 or 2, wherein the public key certificate is generated based on a private key of a vehicle-mounted control device, and the method further comprises:
verifying the public key certificate based on a public key of the vehicle-mounted control device.

6. The method according to claim 1 or 2, wherein the method further comprises:
receiving the public key of the electronic device from a vehicle-mounted control device; and
generating authorization information of the public key of the electronic device.

7. The method according to claim 6, wherein the method further comprises:
verifying the public key of the electronic device based on the authorization information.

8. The method according to claim 6 or 7, wherein the method further comprises:
deleting the authorization information.

9. The method according to any one of claims 1 to 8, wherein the first upgrade request comprises upgrade information of the at least one vehicle-mounted device.

10. The method according to any one of claims 1 to 9, wherein the public key certificate comprises at least one of the following: the upgrade information of the at least one vehicle-mounted device, an identifier of the vehicle-mounted control device, an identifier of the server, an identifier of the electronic device, an authorization period, or authorization purpose information.

11. A vehicle-mounted device upgrade method, applied to an electronic device, wherein the method comprises:
sending first signature information and first public key information to a server, wherein the first signature information is obtained by signing a first upgrade request based on a private key of the electronic device, the first upgrade request is used to request an upgrade package of at least one vehicle-mounted device, the first public key information is used to verify an identity of the electronic device, and the first public key information comprises a public key certificate of a public key of the electronic device, or the first public key information comprises a public key of the electronic device;
receiving the upgrade package from the server; and
sending the upgrade package to a vehicle-mounted control device.

12. The method according to claim 11, wherein the method further comprises:
receiving the public key certificate from the vehicle-mounted control device, wherein the public key certificate is generated based on a private key of the vehicle-mounted control device, or the public key certificate is generated based on a private key of the server.

13. The method according to claim 12, wherein the method further comprises:
obtaining the public key of the electronic device and the private key of the electronic device; and
sending the public key of the electronic device to the vehicle-mounted control device.

14. The method according to any one of claims 11 to 13, wherein the first upgrade request comprises upgrade information of the at least one vehicle-mounted device.

15. The method according to any one of claims 11 to 14, wherein the public key certificate comprises at least one of the following: the upgrade information of the at least one vehicle-mounted device, an identifier of the vehicle-mounted control device, an identifier of the server, an identifier of the electronic device, an authorization period, or authorization purpose information.

16. The method according to claim 14 or 15, wherein the method further comprises:
receiving the upgrade information of the at least one vehicle-mounted device from the vehicle-mounted control device.

17. A vehicle-mounted device upgrade method, applied to a vehicle-mounted control device, wherein the method comprises:
receiving a public key of an electronic device from the electronic device; and
sending a public key certificate of the public key of the electronic device to the electronic device, wherein the public key certificate is generated based on a private key of the vehicle-mounted control device, or the public key certificate is generated based on a private key of a server.

18. The method according to claim 17, wherein the public key certificate is generated based on the private key of the server, and the method further comprises:
sending the public key of the electronic device to the server; and
receiving the public key certificate from the server.

19. The method according to claim 17 or 18, wherein the public key certificate comprises at least one of the following: upgrade information of at least one vehicle-mounted device, an identifier of the vehicle-mounted control device, an identifier of the server, an identifier of the electronic device, an authorization period, or authorization purpose information.

20. The method according to claim 19, wherein the method further comprises:
sending the upgrade information of the at least one vehicle-mounted device to the electronic device.

21. A vehicle-mounted device upgrade method, applied to a vehicle-mounted control device, wherein the method comprises:
receiving a public key of an electronic device from the electronic device; and
sending the public key of the electronic device and first indication information to a server, wherein the first indication information indicates authorization information for generating the public key of the electronic device.

22. The method according to claim 21, wherein the method further comprises:
sending upgrade information of at least one vehicle-mounted device to the electronic device.

23. A vehicle-mounted device upgrade method, applied to a server, wherein the method comprises:
receiving second signature information from an electronic device, wherein the second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device; and
when verification of the second signature information succeeds, sending the upgrade package to the electronic device.

24. The method according to claim 23, wherein the method further comprises:
verifying the second signature information based on a public key of the vehicle-mounted control device.

25. The method according to claim 23 or 24, wherein the method further comprises:
storing the authorization information in an authorization information cancellation list.

26. The method according to any one of claims 23 to 25, wherein the first upgrade request comprises upgrade information of the at least one vehicle-mounted device.

27. The method according to any one of claims 23 to 26, wherein the authorization information comprises at least one of the following: the upgrade information of the at least one vehicle-mounted device, an identifier of the vehicle-mounted control device, an identifier of the server, an identifier of the electronic device, an authorization period, or authorization purpose information.

28. A vehicle-mounted device upgrade method, applied to an electronic device, wherein the method comprises:
sending second signature information to a server, wherein the second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device;
receiving the upgrade package from the server; and
sending the upgrade package to the vehicle-mounted control device.

29. The method according to claim 28, wherein the method further comprises:
receiving the proxy signature key from the vehicle-mounted control device.

30. The method according to claim 28 or 29, wherein the first upgrade request comprises upgrade information of the at least one vehicle-mounted device.

31. The method according to any one of claims 28 to 30, wherein the authorization information comprises at least one of the following: the upgrade information of the at least one vehicle-mounted device, an identifier of the vehicle-mounted control device, an identifier of the server, an identifier of the electronic device, an authorization period, or authorization purpose information.

32. The method according to claim 30 or 31, wherein the method further comprises:
receiving the upgrade information of the at least one vehicle-mounted device from the vehicle-mounted control device.

33. A vehicle-mounted device upgrade method, applied to a vehicle-mounted control device, wherein the method comprises:
obtaining a proxy signature key, wherein the proxy signature key is obtained based on a private key of the vehicle-mounted control device and authorization information of the proxy signature key; and
sending the proxy signature key to an electronic device.

34. The method according to claim 33, wherein the authorization information comprises at least one of the following: upgrade information of at least one vehicle-mounted device, an identifier of the vehicle-mounted control device, an identifier of a server, an identifier of the electronic device, an authorization period, or authorization purpose information.

35. The method according to claim 34, wherein the method further comprises:
sending the upgrade information of the at least one vehicle-mounted device to the electronic device.

36. A communication device, wherein the communication device comprises a transceiver module and a processing module, wherein
the transceiver module is configured to receive first signature information and first public key information from an electronic device, wherein the first signature information is obtained by signing a first upgrade request based on a private key of the electronic device, the first upgrade request is used to request an upgrade package of at least one vehicle-mounted device, the first public key information is used to verify an identity of the electronic device, and the first public key information comprises a public key certificate of a public key of the electronic device, or the first public key information comprises a public key of the electronic device; and
the processing module is configured to: when verification of the first signature information and the first public key information succeeds, send the upgrade package to the electronic device via the transceiver module.

37. The communication device according to claim 36, wherein
the processing module is further configured to verify the first signature information based on the public key of the electronic device.

38. The communication device according to claim 36 or 37, wherein
the transceiver module is further configured to receive the public key of the electronic device from a vehicle-mounted control device; and
the transceiver module is further configured to send the public key certificate to the vehicle-mounted control device, wherein the public key certificate is generated based on a private key of the communication device.

39. The communication device according to claim 38, wherein
the processing module is further configured to verify the public key certificate based on a public key of the communication device.

40. The communication device according to claim 36 or 37, wherein the public key certificate is generated based on a private key of a vehicle-mounted control device; and
the processing module is further configured to verify the public key certificate based on a public key of the vehicle-mounted control device.

41. The communication device according to claim 36 or 37, wherein
the transceiver module is further configured to receive the public key of the electronic device from a vehicle-mounted control device; and
the processing module is further configured to generate authorization information of the public key of the electronic device.

42. The communication device according to claim 41, wherein
the processing module is further configured to verify the public key of the electronic device based on the authorization information.

43. The communication device according to claim 41 or 42, wherein
the processing module is further configured to delete the authorization information.

44. The communication device according to any one of claims 36 to 43, wherein the first upgrade request comprises upgrade information of the at least one vehicle-mounted device.

45. The communication device according to any one of claims 36 to 44, wherein the public key certificate comprises at least one of the following: the upgrade information of the at least one vehicle-mounted device, an identifier of the vehicle-mounted control device, an identifier of the communication device, an identifier of the electronic device, an authorization period, or authorization purpose information.

46. A communication device, wherein the communication device comprises a transceiver module, wherein
the transceiver module is configured to send first signature information and first public key information to a server, wherein the first signature information is obtained by signing a first upgrade request based on a private key of the communication device, the first upgrade request is used to request an upgrade package of at least one vehicle-mounted device, the first public key information is used to verify an identity of the communication device, and the first public key information comprises a public key certificate of a public key of the communication device, or the first public key information comprises a public key of the communication device;
the transceiver module is further configured to receive the upgrade package from the server; and
the transceiver module is further configured to send the upgrade package to a vehicle-mounted control device.

47. The communication device according to claim 46, wherein
the transceiver module is further configured to receive the public key certificate from the vehicle-mounted control device, wherein the public key certificate is generated based on a private key of the vehicle-mounted control device, or the public key certificate is generated based on a private key of the server.

48. The communication device according to claim 47, wherein the communication device further comprises a processing module, wherein
the processing module is configured to obtain the public key of the communication device and the private key of the communication device; and
the transceiver module is further configured to send the public key of the communication device to the vehicle-mounted control device.

49. The communication device according to any one of claims 46 to 48, wherein the first upgrade request comprises upgrade information of the at least one vehicle-mounted device.

50. The communication device according to any one of claims 46 to 49, wherein the public key certificate comprises at least one of the following: the upgrade information of the at least one vehicle-mounted device, an identifier of the vehicle-mounted control device, an identifier of the server, an identifier of the communication device, an authorization period, or authorization purpose information.

51. The communication device according to claim 49 or 50, wherein
the transceiver module is further configured to receive the upgrade information of the at least one vehicle-mounted device from the vehicle-mounted control device.

52. A communication device, wherein the communication device comprises a transceiver module, wherein
the transceiver module is configured to receive a public key of an electronic device from the electronic device; and
the transceiver module is further configured to send a public key certificate of the public key of the electronic device to the electronic device, wherein the public key certificate is generated based on a private key of the communication device, or the public key certificate is generated based on a private key of a server.

53. The communication device according to claim 52, wherein the public key certificate is generated based on the private key of the server, wherein
the transceiver module is further configured to send the public key of the electronic device to the server; and
the transceiver module is further configured to receive the public key certificate from the server.

54. The communication device according to claim 52 or 53, wherein the public key certificate comprises at least one of the following: upgrade information of at least one vehicle-mounted device, an identifier of the communication device, an identifier of the server, an identifier of the electronic device, an authorization period, or authorization purpose information.

55. The communication device according to claim 54, wherein
the transceiver module is further configured to send the upgrade information of the at least one vehicle-mounted device to the electronic device.

56. A communication device, wherein the communication device comprises a transceiver module, wherein
the transceiver module is configured to receive a public key of an electronic device from the electronic device; and
the transceiver module is further configured to send the public key of the electronic device and first indication information to a server, wherein the first indication information indicates authorization information for generating the public key of the electronic device.

57. The communication device according to claim 56, wherein
the transceiver module is further configured to send upgrade information of at least one vehicle-mounted device to the electronic device.

58. A communication device, wherein the communication device comprises a transceiver module and a processing module, wherein
the transceiver module is configured to receive second signature information from an electronic device, wherein the second signature information is used to verify an identity of the electronic device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device; and
the processing module is configured to: when verification of the second signature information succeeds, send the upgrade package to the electronic device via the transceiver module.

59. The communication device according to claim 58, wherein
the processing module is further configured to verify the second signature information based on a public key of the vehicle-mounted control device.

60. The communication device according to claim 58 or 59, wherein
the processing module is further configured to store the authorization information in an authorization information cancellation list.

61. The communication device according to any one of claims 58 to 60, wherein the first upgrade request comprises upgrade information of the at least one vehicle-mounted device.

62. The communication device according to any one of claims 58 to 61, wherein the authorization information comprises at least one of the following: the upgrade information of the at least one vehicle-mounted device, an identifier of the vehicle-mounted control device, an identifier of the communication device, an identifier of the electronic device, an authorization period, or authorization purpose information.

63. A communication device, wherein the communication device comprises a transceiver module, wherein
the transceiver module is configured to send second signature information to a server, wherein the second signature information is used to verify an identity of the communication device, the second signature information is obtained by signing a first upgrade request based on a proxy signature key, the proxy signature key is obtained based on a private key of a vehicle-mounted control device and authorization information of the proxy signature key, and the first upgrade request is used to request an upgrade package of at least one vehicle-mounted device;
the transceiver module is further configured to receive the upgrade package from the server; and
the transceiver module is further configured to send the upgrade package to the vehicle-mounted control device.

64. The communication device according to claim 63, wherein
the transceiver module is further configured to receive the proxy signature key from the vehicle-mounted control device.

65. The communication device according to claim 63 or 64, wherein the first upgrade request comprises upgrade information of the at least one vehicle-mounted device.

66. The communication device according to any one of claims 63 to 65, wherein the authorization information comprises at least one of the following: the upgrade information of the at least one vehicle-mounted device, an identifier of the vehicle-mounted control device, an identifier of the server, an identifier of the communication device, an authorization period, or authorization purpose information.

67. The communication device according to claim 65 or 66, wherein
the transceiver module is further configured to receive the upgrade information of the at least one vehicle-mounted device from the vehicle-mounted control device.

68. A communication device, wherein the communication device comprises a processing module and a transceiver module, wherein
the processing module is configured to obtain a proxy signature key, wherein the proxy signature key is obtained based on a private key of the communication device and authorization information of the proxy signature key; and
the transceiver module is configured to send the proxy signature key to an electronic device.

69. The communication device according to claim 68, wherein the authorization information comprises at least one of the following: upgrade information of at least one vehicle-mounted device, an identifier of the communication device, an identifier of a server, an identifier of the electronic device, an authorization period, or authorization purpose information.

70. The communication device according to claim 69, wherein
the transceiver module is further configured to send the upgrade information of the at least one vehicle-mounted device to the electronic device.

71. A communication device, comprising: a processor, wherein the processor is coupled to a memory, the memory is configured to store a program or instructions, and when the program or the instructions are executed by the processor, the apparatus is enabled to perform the method according to any one of claims 1 to 10, or perform the method according to any one of claims 11 to 16, or perform the method according to any one of claims 17 to 20, or perform the method according to claim 21 or 22, or perform the method according to any one of claims 23 to 27, or perform the method according to any one of claims 28 to 32, or perform the method according to any one of claims 33 to 35.

72. A computer-readable storage medium, wherein the computer-readable storage medium stores a computer program or instructions, and when the computer program or the instructions are executed, a computer is enabled to perform the method according to any one of claims 1 to 10, or perform the method according to any one of claims 11 to 16, or perform the method according to any one of claims 17 to 20, or perform the method according to claim 21 or 22, or perform the method according to any one of claims 23 to 27, or perform the method according to any one of claims 28 to 32, or perform the method according to any one of claims 33 to 35.

73. A computer program product, wherein the computer program product comprises computer program code, and when the computer program code is run on a computer, the computer is enabled to perform the method according to any one of claims 1 to 10, or perform the method according to any one of claims 11 to 16, or perform the method according to any one of claims 17 to 20, or perform the method according to claim 21 or 22, or perform the method according to any one of claims 23 to 27, or perform the method according to any one of claims 28 to 32, or perform the method according to any one of claims 33 to 35.

74. A chip, comprising: a processor, wherein the processor is coupled to a memory, the memory is configured to store a program or instructions, and when the program or the instructions are executed by the processor, the chip is enabled to perform the method according to any one of claims 1 to 10, or perform the method according to any one of claims 11 to 16, or perform the method according to any one of claims 17 to 20, or perform the method according to claim 21 or 22, or perform the method according to any one of claims 23 to 27, or perform the method according to any one of claims 28 to 32, or perform the method according to any one of claims 33 to 35.

75. A vehicle, comprising the communication device according to any one of claims 52 to 55, or the communication device according to claim 56 or 57, or the communication device according to any one of claims 68 to 70.
